(19) Europäisches Patentamt
European Patent Office
Office européen des brevets

(11) **EP 4 624 183 A1**

(12) **EUROPEAN PATENT APPLICATION**
published in accordance with Art. 153(4) EPC

(43) Date of publication:
**01.10.2025 Bulletin 2025/40**

(21) Application number: **23894289.0**

(22) Date of filing: **13.10.2023**

(51) International Patent Classification (IPC):
**B41M 5/00** $^{(2006.01)}$    **B41J 2/01** $^{(2006.01)}$
**B41J 2/21** $^{(2006.01)}$    **C09D 11/322** $^{(2014.01)}$
**C09D 11/54** $^{(2014.01)}$

(52) Cooperative Patent Classification (CPC):
**B41J 2/01; B41J 2/21; B41M 5/00; C09D 11/322;
C09D 11/54**

(86) International application number:
**PCT/JP2023/037296**

(87) International publication number:
**WO 2024/111277 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2022 JP 2022186647**

(71) Applicant: **FUJIFILM Corporation
Tokyo 106-8620 (JP)**

(72) Inventor: **HOUJOU, Hiroaki
Ashigarakami-gun, Kanagawa 258-8577 (JP)**

(74) Representative: **Klunker IP
Patentanwälte PartG mbB
Destouchesstraße 68
80796 München (DE)**

(54) **IMAGE RECORDING METHOD**

(57) An image recording method includes: a step of applying an ink containing water onto a non-permeable substrate; a step of transporting the non-permeable substrate onto which the ink has been applied, using a transport member having an uneven surface; and a step of heating the non-permeable substrate, in which, in a case where an amount of ink applied per unit area onto the non-permeable substrate is denoted by V (g/m²), a thickness of the non-permeable substrate is denoted by t ($\mu$m), and a width of a portion with a smaller surface area between a recess portion and a protrusion portion of the transport member, is denoted by A ($\mu$m), the V, the t, and the A satisfy Expression (1),

$$10 \leq (\text{V/t}) \times \text{A} \leq 4000 \quad \dots(1).$$

FIG. 1

EP 4 624 183 A1

**Description**

BACKGROUND OF THE INVENTION

1. Field of the Invention

The present disclosure relates to an image recording method.

2. Description of the Related Art

In the related art, various studies have been conducted on an image recording method.

For example, JP2010-208207A describes an image recording apparatus comprising a transport device that includes a belt main body on which a medium is placed and transported, and a functional layer provided on a surface on which the medium is placed on the belt main body and having an uneven pattern, in which the uneven pattern includes a plurality of protrusion portions that extend along one direction and are disposed substantially parallel to each other, and recess portions that are provided between the plurality of protrusion portions, and a transport belt in which the protrusion portion extends in a direction not orthogonal to a circumferential direction of the belt main body, and a recording head that jets ink droplets onto the medium transported by the transport device.

SUMMARY OF THE INVENTION

However, in a case where a non-permeable substrate to which an ink is applied is transported using a transport member having an uneven surface, unevenness may occur in an image recorded on the non-permeable substrate. Therefore, it is required to maintain the transportability in a case where a transport member having an uneven surface is used and to suppress unevenness of an image to be recorded.

The present disclosure has been made in view of such circumstances, and an object of one embodiment of the present disclosure is to provide an image recording method with excellent transportability of a non-permeable substrate and capable of suppressing unevenness of an image to be recorded.

The present disclosure includes the following aspects.

<1> An image recording method comprising:

a step of applying an ink containing water onto a non-permeable substrate;
a step of transporting the non-permeable substrate onto which the ink has been applied, using a transport member having an uneven surface; and
a step of heating the non-permeable substrate,
in which, in a case where an amount of ink applied per unit area onto the non-permeable substrate is denoted by V $(g/m^2)$, a thickness of the non-permeable substrate is denoted by t $(\mu m)$, and a width of a portion with a smaller surface area between a recess portion and a protrusion portion of the transport member, is denoted by A $(\mu m)$, the V, the t, and the A satisfy Expression (1).

$$10 \leq (V/t) \times A \leq 4000 \quad \ldots (1)$$

<2> The image recording method according to <1>,
in which the V, the t, and the A satisfy Expression (2).

$$10 \leq (V/t) \times A \leq 2000 \quad \ldots (2)$$

<3> The image recording method according to <1>,
in which the V, the t, and the A satisfy Expression (3).

$$10 \leq (V/t) \times A \leq 1000 \quad \ldots (3)$$

<4> The image recording method according to any one of <1> to <3>,
in which, in a case where a surface free energy of the non-permeable substrate is denoted by E1 (mN/m), a surface tension of the ink is denoted by E2 (mN/m), and a value obtained by subtracting E2 from E1 is denoted by $\Delta E$, Expression (4) is satisfied.

$$\Delta E/E2 \leq 0.50 \ldots (4)$$

<5> The image recording method according to any one of <1> to <4>,
in which, in a case where a surface free energy of the non-permeable substrate is denoted by E1 (mN/m), a surface tension of the ink is denoted by E2 (mN/m), and a value obtained by subtracting E2 from E1 is denoted by ΔE, Expression (5) is satisfied.

$$4 \leq (V/t) \times A \times (\Delta E/E2) \leq 1200 \quad \ldots (5)$$

<6> The image recording method according to any one of <1> to <5>,
in which, in a case where a larger surface area between a surface area of the recess portion and a surface area of the protrusion portion of the transport member is denoted by $T^A$ and a smaller surface area between the surface area of the recess portion and the surface area of the protrusion portion of the transport member is denoted by $T^B$, Expression (6) is satisfied.

$$0.08 \leq T^B/T^A \leq 0.6 \quad \ldots (6)$$

<7> The image recording method according to any one of <1> to <6>,
in which the ink contains water and a white pigment.
<8> The image recording method according to any one of <1> to <7>,

in which the step of applying an ink includes

a step of applying a first ink containing water and a coagulating agent onto the non-permeable substrate, and
a step of applying a second ink containing water and a pigment onto the non-permeable substrate onto which the first ink has been applied,

in the step of transporting, the first ink is transported using the transport member, and
in a case where an amount of the first ink applied per unit area onto the non-permeable substrate is denoted by V, the V, the t, and the A satisfy Expression (1).

According to an embodiment of the present disclosure, it is possible to provide an image recording method with excellent transportability of a non-permeable substrate and capable of suppressing unevenness of an image to be recorded.

BRIEF DESCRIPTION OF THE DRAWINGS

Fig. 1 is a diagram conceptually showing the first specific example of an image recording apparatus used in an image recording method according to the present disclosure.
Fig. 2 is a diagram conceptually showing the second specific example of the image recording apparatus used in the image recording method according to the present disclosure.
Fig. 3A is a diagram showing an example of a transport member used in the image recording method of the present disclosure.
Fig. 3B is a diagram showing an example of the transport member used in the image recording method of the present disclosure.
Fig. 3C is a diagram showing an example of the transport member used in the image recording method of the present disclosure.
Fig. 4A is a diagram for explaining a method of calculating a surface area of a recess portion and a protrusion portion.
Fig. 4B is a diagram for explaining a method of calculating a surface area of a recess portion and a protrusion portion.
Fig. 4C is a diagram for explaining a method of calculating a surface area of a recess portion and a protrusion portion.
Fig. 4D is a diagram for explaining a method of calculating a surface area of a recess portion and a protrusion portion.
Fig. 4E is a diagram for explaining a method of calculating a surface area of a recess portion and a protrusion portion.
Fig. 4F is a diagram for explaining a method of calculating a surface area of a recess portion and a protrusion portion.
Fig. 4G is a diagram for explaining a method of calculating a surface area of a recess portion and a protrusion portion.

DESCRIPTION OF THE PREFERRED EMBODIMENTS

In the present disclosure, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present disclosure, in a case in which a plurality of substances corresponding to respective components in a composition are present, the amount of the respective components in the composition means the total amount of the plurality of substances present in the composition unless otherwise specified.

In the present disclosure, a combination of two or more preferred aspects is a more preferred aspect.

In the present disclosure, the meaning of the term "step" includes not only an independent step but also a step whose intended purpose is achieved even in a case in which the step is not clearly distinguished from other steps.

In the present disclosure, the "ink" means a liquid applied onto a non-permeable substrate. The concept of "ink" in the present disclosure includes not only a liquid exhibiting a specific color but also a colorless and transparent liquid. In general, a pretreatment liquid that is applied onto a non-permeable substrate before the colored ink is applied is also an aspect of the ink.

In the present disclosure, the "image" means an ink film itself in a case where one type of ink is used, and means a laminated film of a plurality of ink films in a case where a plurality of inks are used in an overlapping manner.

In the present disclosure, "image recording" means formation of the image.

The concept of "image" in the present disclosure also includes a solid image.

In the present disclosure, unless otherwise specified, "upstream side" means an upstream side of a non-permeable substrate in a transport direction, unless otherwise specified, and "downstream side" means a downstream side of a non-permeable substrate in the transport direction.

[Image recording method]

The image recording method of the present disclosure includes a step of applying an ink containing water onto a non-permeable substrate (hereinafter, also referred to as an "ink applying step"), a step of transporting the non-permeable substrate onto which the ink has been applied, using a transport member having an uneven surface (hereinafter, also referred to as a "transporting step"), and a step of heating the non-permeable substrate (hereinafter, also referred to as a "heating step"), and in a case where an amount of the ink applied onto the non-permeable substrate per unit area is denoted by V (g/m$^2$), a thickness of the non-permeable substrate is denoted by t ($\mu$m), and a width of a portion with a smaller surface area between a recess portion and a protrusion portion of the transport member is denoted by A ($\mu$m), V, t, and A satisfy Expression (1).

$$10 \le (V/t) \times A \le 4000 \quad \ldots(1)$$

The image recording method of the present disclosure may include other steps in addition to the ink applying step, the transporting step, and the heating step, as necessary.

According to the image recording method of the present disclosure, the non-permeable substrate has excellent transportability, and unevenness of the recorded image can be suppressed.

Such an effect is exhibited by satisfying Expression (1) with the V, the t, and the A.

In the related art, in a case where an image is recorded on a non-permeable substrate, the use of a transport member having an uneven surface tends to suppress problems such as the formation of wrinkles on the non-permeable substrate, slippage of the non-permeable substrate, and adhesion of the non-permeable substrate to the transport member. However, in the transport member having an uneven shape on the surface, the recess portion comes into contact with the non-permeable substrate, whereas the protrusion portion does not come into contact with the non-permeable substrate. Therefore, there may be a temperature difference between a portion where the non-permeable substrate and the transport member are in contact with each other and a portion where the non-permeable substrate and the transport member are not in contact with each other. This temperature difference may also affect the ink film formed on the non-permeable substrate. In particular, in a case where an aqueous ink containing water is used, a temperature difference occurs in the ink film, and thus the dry state of the ink film tends to be non-uniform. The non-uniform dry state of the ink film caused the occurrence of shading unevenness (also simply referred to as "unevenness") of the image.

The present inventors have focused on the amount of ink applied per unit area to the non-permeable substrate, the thickness of the non-permeable substrate, and the width of a portion with a smaller surface area between the recess portion and the protrusion portion of the transport member, and have found that in a case where these parameters satisfy Expression (1), the unevenness of the image can be suppressed without impairing the transportability of the transport member having an uneven surface.

JP2010-208207A describes a step of transporting a substrate using a transport member having an uneven surface and applying an ink, but does not describe the above parameters.

<First specific example of image recording apparatus>

Hereinafter, a first specific example of an image recording apparatus used in the image recording method according to the present disclosure will be described with reference to the accompanying drawing.

In the drawing and description of the present disclosure, substantially the same elements (for example, components or parts) may be designated by the same reference numerals, and redundant description thereof may be omitted.

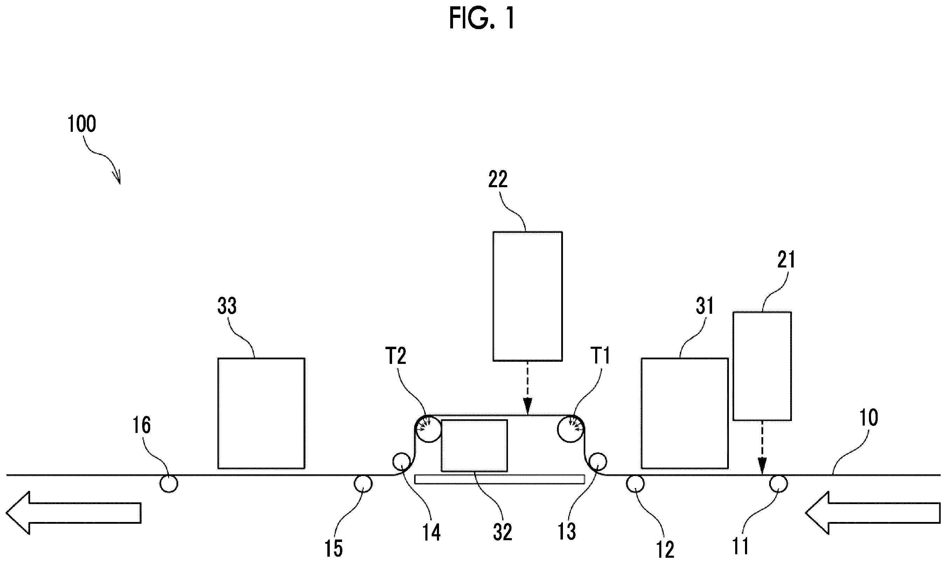

Fig. 1 is a diagram conceptually showing the first specific example of the image recording apparatus used in the image recording method according to the present disclosure.

As shown in Fig. 1, an image recording apparatus 100, which is a first specific example of an image recording apparatus, comprises transport rollers 11 to 16, T1, and T2 as transport members for transporting a non-permeable substrate 10.

The image recording apparatus 100 includes, in order from an upstream side in the transport direction along the transport direction of the non-permeable substrate 10, a pretreatment liquid applying device 21 for applying a pretreatment liquid onto the non-permeable substrate 10; a pretreatment liquid drying device 31 for drying the pretreatment liquid applied onto the non-permeable substrate 10; an ink jet head 22 for applying an ink onto the non-permeable substrate 10 by an ink jet method; and ink drying devices 32 and 33 for drying the ink applied onto the non-permeable substrate 10 to obtain an ink film. The pretreatment liquid described herein corresponds to a first ink described later, and the ink corresponds to a second ink described later. Preferred aspects of the pretreatment liquid (that is, the first ink) and the ink (that is, the second ink) will be described later.

In the image recording apparatus 100, the non-permeable substrate 10 is transported in the direction of the arrow in Fig. 1 by the transport rollers 11 to 16, T1, and T2.

The non-permeable substrate 10 to be transported is subjected to application of the pretreatment liquid by the pretreatment liquid applying device 21, drying of the pretreatment liquid by the pretreatment liquid drying device 31, application of the ink by the ink jet head 22, and drying of the ink by the ink drying devices 32 and 33, in this order.

In the present disclosure, the treatment in this order means that the application of the pretreatment liquid, the drying of the pretreatment liquid, the application of the ink, and the drying of the ink are performed in this order with respect to a certain point X on the non-permeable substrate to be transported.

Each of the transport rollers 11 to 16 as the transport members for transporting the non-permeable substrate 10 transports the non-permeable substrate 10 while being in contact with an applied surface of the pretreatment liquid and the ink (hereinafter, also simply referred to as "applied surface") or a non-applied surface of the pretreatment liquid and the ink (hereinafter, also simply referred to as "non-applied surface") in the non-permeable substrate 10.

In addition, the transport rollers T1 and T2 as transport members for transporting the non-permeable substrate 10 are transport rollers having an uneven shape on the surface, and transport the non-permeable substrate 10 while coming into contact with the non-applied surface of the non-permeable substrate 10. Specifically, the surfaces of the transport rollers T1 and T2 have an uneven shape, and the non-permeable substrate 10 is transported while the protrusion portion is in contact with the non-applied surface of the non-permeable substrate 10.

In the image recording apparatus 100 according to the first specific example, first, the non-permeable substrate 10 is transported by the transport roller 11, and then the pretreatment liquid is applied onto the non-permeable substrate 10 by the pretreatment liquid applying device 21. The pretreatment liquid on the non-permeable substrate 10 is dried by the pretreatment liquid drying device 31, and a pretreatment liquid film is formed on the non-permeable substrate 10.

The non-permeable substrate 10 on which the pretreatment liquid film is formed is transported by a transport roller 12 that comes into contact with the non-applied surface, and then transported by a transport roller 13 that comes into contact with the applied surface in an arrangement in which the transport roller 13 and the pretreatment liquid film come into contact with each other.

The non-permeable substrate 10 on which the pretreatment liquid film is formed is transported below the ink jet head 22 by the transport roller T1.

The ink is applied by the ink jet head 22 onto the pretreatment liquid film formed on the non-permeable substrate 10 that has reached below the ink jet head 22.

The ink applied onto the pretreatment liquid film formed on the non-permeable substrate 10 is dried by the ink drying device 32. The drying by the ink drying device 32 is performed under drying conditions weaker than the drying conditions of the ink drying device 33, and the ink film is formed on the pretreatment liquid film.

The non-permeable substrate 10 on which the ink film is formed is transported by the transport roller T2 disposed on the downstream side of the ink drying device 32, and then transported by the transport roller 14, that comes into contact with the applied surface, in an arrangement in which the transport roller 14 and the ink film are in contact with each other.

Further, the non-permeable substrate 10 on which the ink film is formed is transported by a transport roller 15 that comes into contact with the non-applied surface, the ink film is dried by an ink drying device 33, and the ink film is transported by a transport roller 16 that comes into contact with the non-applied surface.

In the image recording apparatus 100, the transport roller T1, which is a transport member having an uneven shape on the surface, is disposed on the downstream side of the pretreatment liquid applying device 21, and the non-permeable substrate 10 to which the pretreatment liquid is applied can be transported by the transport roller T1. In the image recording apparatus used in the image recording method according to the embodiment of the present disclosure, the transport roller having an uneven shape on the surface may be disposed downstream of the application position of the ink (the pretreatment liquid in the image recording apparatus 100) to be first applied onto the non-permeable substrate, and the disposition position of the other transport roller is not particularly limited.

In the first specific example, a plurality of ink jet heads may be disposed at the position of the ink jet head 22 along the transport direction. In this case, a plurality of inks of colors (for example, a first ink and a second ink described later) can be applied in a superimposed manner.

In this case, the plurality of inks of colors applied in a superimposed manner can be dried by the ink drying devices 32 and 33, whereby an ink film derived from the plurality of inks of colors can be obtained.

<Second specific example of image recording apparatus>

Hereinafter, a second specific example of an image recording apparatus used in the image recording method according to the present disclosure will be described with reference to the accompanying drawing.

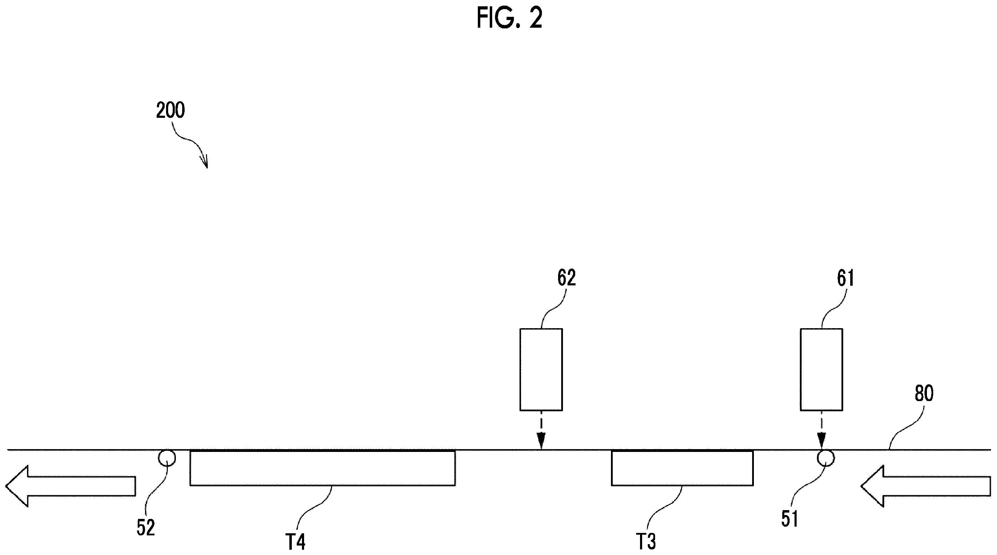

Fig. 2 is a diagram conceptually showing the second specific example of the image recording apparatus used in the image recording method according to the present disclosure.

As shown in Fig. 2, an image recording apparatus 200, which is a first specific example of the image recording apparatus, comprises transport rollers 51 and 52 as transport members for transporting the non-permeable substrate 80, and heater-equipped platens T3 and T4 as transport members and drying devices.

The image recording apparatus 200 includes, in order from an upstream side in the transport direction along the transport direction of the non-permeable substrate 80, a pretreatment liquid applying device 61 for applying a pretreatment liquid onto the non-permeable substrate 80; a heater-equipped platen T3 for drying the pretreatment liquid applied onto the non-permeable substrate 80; an ink jet head 62 for applying an ink onto the non-permeable substrate 80 by an ink jet method; and a heater-equipped platen T4 for drying the ink applied onto the non-permeable substrate 80 to obtain an ink film.

In the image recording apparatus 200, the non-permeable substrate 80 is transported in the direction of the arrow in Fig. 2 along the transport path in which the transport rollers 51 and 52 and the heater-equipped platens T3 and T4 are disposed.

The non-permeable substrate 80 to be transported is subjected to the application of the pretreatment liquid by the pretreatment liquid applying device 61, the drying of the pretreatment liquid by the heater-equipped platen T3, the application of the ink by the ink jet head 62, and the drying of the ink by the heater-equipped platen T4 in this order.

Each of the transport rollers 51 and 52 as transport members for transporting the non-permeable substrate 80 transports the non-permeable substrate 80 while coming into contact with the non-applied surface of the non-permeable substrate 80.

In addition, the heater-equipped platens T3 and T4 as the transport member for transporting the non-permeable substrate 80 transport the non-permeable substrate 80 while being in contact with the non-applied surface of the non-permeable substrate 80. Specifically, the heater-equipped platens T3 and T4 have through-holes formed in a flat surface, and the non-permeable substrate 80 is transported while the flat surface is in contact with the non-applied surface of the non-permeable substrate 80.

In the image recording apparatus 200 according to the second specific example, first, the non-permeable substrate 80 is transported by the transport roller 51, and then the pretreatment liquid is applied onto the non-permeable substrate 80 by the pretreatment liquid applying device 61. The pretreatment liquid on the non-permeable substrate 80 is dried by the heater-equipped platen T3, and a pretreatment liquid film is formed on the non-permeable substrate 80.

The non-permeable substrate 80 on which the pretreatment liquid film is formed is transported to below the ink jet head 62 by the heater-equipped platen T3.

The ink is applied onto the pretreatment liquid film formed on the non-permeable substrate 80 that has reached below the ink jet head 62 by the ink jet head 62.

The ink applied onto the pretreatment liquid film formed on the non-permeable substrate 80 is dried by the heater-equipped platen T4.

Further, the non-permeable substrate 80 on which the ink film is formed is transported by the transport roller 52 that comes into contact with the non-applied surface.

In the image recording apparatus 200, the heater-equipped platen T3, which is a transport member having an uneven shape on the surface, is disposed on the downstream side of the pretreatment liquid applying device 61, and the non-permeable substrate 80 to which the pretreatment liquid is applied can be transported by the heater-equipped platen T3. In addition, the heater-equipped platen T3 has a function as a drying device and can dry the pretreatment liquid.

In the image recording apparatus used in the image recording method according to the embodiment of the present disclosure, the transport member having an uneven shape on the surface may be disposed downstream of the application position of the ink (the pretreatment liquid in the image recording apparatuses 100, 200) to be first applied onto the non-permeable substrate, and the disposition position of the other transport member is not particularly limited.

In the first specific example, a plurality of ink jet heads may be disposed at the position of the ink jet head 22 along the transport direction. In the second specific example, a plurality of ink jet heads may be disposed at the position of the ink jet head 62 along the transport direction. In this case, a plurality of inks of colors (for example, a first ink and a second ink described later) can be applied in a superimposed manner.

In this case, the plurality of inks of colors applied in a superimposed manner can be dried by the ink drying devices 32 and 33, whereby an ink film derived from the plurality of inks of colors can be obtained.

In the image recording method of the present disclosure, the pretreatment liquid applying step and the pretreatment liquid drying step may be provided as necessary.

Therefore, in the first specific example, in a case where the pretreatment liquid applying step and the pretreatment liquid drying step are not performed, the ink may be directly applied onto the non-permeable substrate 10 by the ink jet head 22 without performing the treatments of the pretreatment liquid applying device 21 and the pretreatment liquid drying device 31.

That is, the non-permeable substrate 10 may be transported to pass through the pretreatment liquid applying device 21 and the pretreatment liquid drying device 31.

In the image recording apparatus 100, the transport roller T2, which is a transport roller having an uneven shape on the surface, is disposed on the downstream side of the ink jet head 22, and the non-permeable substrate 10 to which the ink is applied can be transported by the transport roller T2.

In addition, in the first specific example, in a case where the pretreatment liquid applying step and the pretreatment liquid drying step are not performed, the pretreatment liquid applying device 21, the pretreatment liquid drying device 31, and the transport rollers 11 to 13 and T1 may be omitted.

Therefore, in the second specific example, in a case where the pretreatment liquid applying step and the pretreatment liquid drying step are not performed, the ink may be directly applied onto the non-permeable substrate 80 by the ink jet head 62 without performing the treatments of the pretreatment liquid applying device 61 and the heater-equipped platen T3.

That is, the non-permeable substrate 80 may be transported to pass through the pretreatment liquid applying device 61 and the heater-equipped platen T3.

In the image recording apparatus 200, the heater-equipped platen T4, which is a transport member having an uneven shape on the surface, is disposed on the downstream side of the ink jet head 62, and the non-permeable substrate 80 to which the ink is applied can be transported by the heater-equipped platen T4.

The first specific example and the second specific example may include elements other than the above-described elements.

Examples of the other elements include a unwinding device that is provided on the most upstream side and unwinds the non-permeable substrate wound in a roll shape; a winding device that is provided on the most downstream side and winds the non-permeable substrate provided with an ink film (that is, an image); and a tension applying device that applies tension to the non-permeable substrate to be transported.

In addition, in the first specific example, the ink jet head is provided at only one location, but the ink jet head and the ink drying device may be further provided on the downstream side of the ink drying device 33. Similarly, in the second specific example, the ink jet head and the heater-equipped platen may be further provided on the downstream side of the heater-equipped platen T4.

Hereinafter, the image recording method according to the embodiment of the present disclosure will be described in more detail.

<Transport member>

The transport member used in the image recording method of the present disclosure is a transport member with a surface having an uneven shape thereof.

The form having an uneven shape on the surface may be a form in which protrusions are formed on a flat surface, or may be a form in which a recess or a through-hole is formed on a flat surface.

In the uneven shape of the surface, a portion that protrudes relatively is referred to as a protrusion portion, and a portion that is recessed relatively is referred to as a recess portion.

For example, in a case where a protrusion is formed on a flat surface, the protrusion corresponds to a protrusion portion, and the flat surface corresponds to a recess portion. In addition, in a case where a recess or a through-hole is formed in the flat surface, the flat surface corresponds to the protrusion portion, and the recess or the through-hole corresponds to the recess portion.

In the present disclosure, the presence or absence of the through hole is not related to the recess portion.

The shapes of the protrusion portion and the recess portion are not particularly limited. In a cross section obtained by cutting in the thickness direction, a cross-sectional view shape may be a rectangular shape, a trapezoidal shape, a triangular shape, a semicircular shape, or an irregular shape.

The material of the transport member is not particularly limited, and examples thereof include metal and rubber. A surface treatment such as plating may be performed on the surface of the transport member.

The shape of the transport member is not particularly limited, and may be cylindrical or flat.

Examples of the transport member having an uneven shape on the surface include a suction roller, a groove roller, a transport belt, and a platen.

The transport member may be provided with a heating mechanism. In this case, the non-permeable substrate can be heated while being transported.

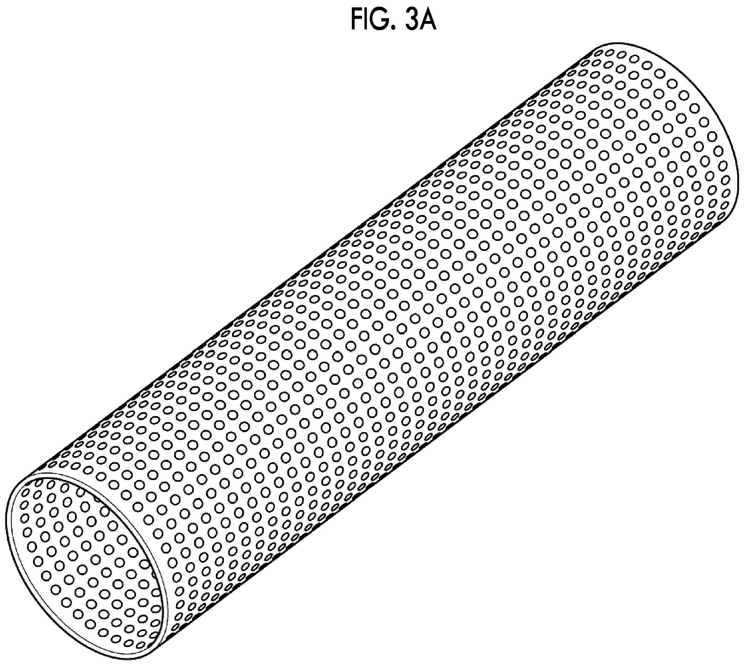

Figs. 3A to 3C are diagrams showing an example of the transport member used in the image recording method of the present disclosure.

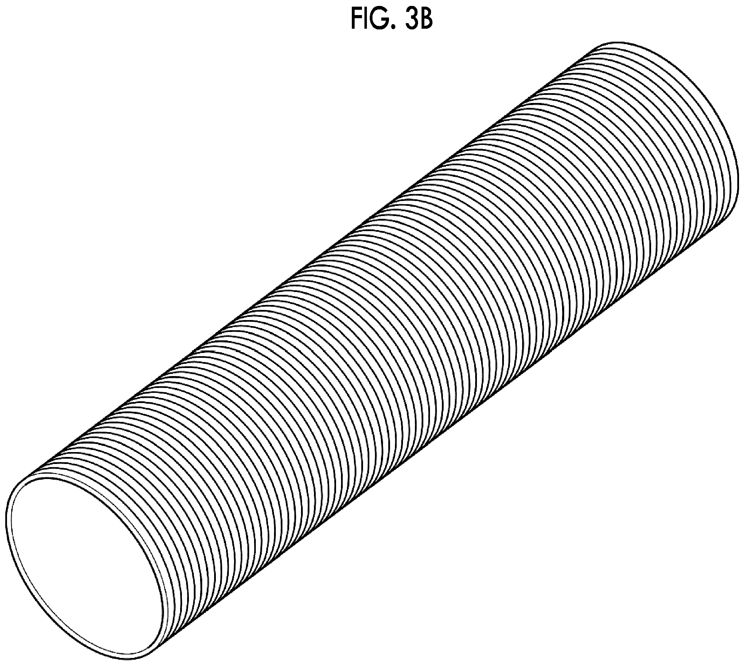

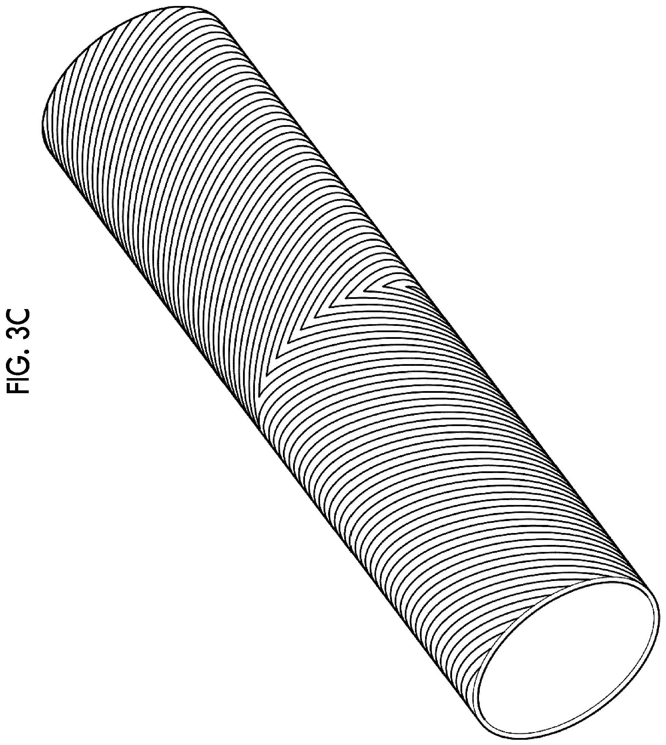

In the transport member shown in Fig. 3A, a plurality of through-holes are formed on the surface. In the transport member shown in Fig. 3B, a groove is formed along a direction parallel to the transport direction of the non-permeable substrate. In the transport member shown in Fig. 3C, helical grooves are formed in a left-right symmetrical manner from the center of the transport member toward both end portions.

In a case where a portion having a larger surface area, of the recess portion and the protrusion portion, is denoted by $T^A$ and a portion having a smaller surface area thereof is denoted by $T^B$, it is preferable that the transport member satisfies Expression (6).

$$0.08 \leq T^B/T^A \leq 0.6 \quad \ldots (6)$$

In a case where the surface area of the recess portion is larger than the surface area of the protrusion portion by comparing the surface area of the recess portion with the surface area of the protrusion portion, the surface area of the recess portion is denoted as $T^A$ and the surface area of the protrusion portion is denoted as $T^B$.

In a case where the surface area of the protrusion portion is larger than the surface area of the recess portion by comparing the surface area of the recess portion with the surface area of the protrusion portion, the surface area of the protrusion portion is denoted as $T^A$ and the surface area of the recess portion is denoted as $T^B$.

In a case where $T^B/T^A$ is more than 0.08, the formation of wrinkles on the non-permeable substrate is suppressed, and the transportability is excellent. In a case where $T^B/T^A$ is smaller than 0.6, the unevenness of the image is further suppressed.

The surface areas of the recess portion and the protrusion portion in the transport member are measured by the following method. In a case where the recess portion is a through-hole, the surface area of the recess portion means the area of the penetrating region.

In addition, in a case where a plurality of protrusion portions are present on the surface of the transport member, the surface area of the protrusion portions in the transport member means the total surface area obtained by summing up the surface areas of all the protrusion portions.

First, a surface area of one of the recess portion and the protrusion portion of the transport member is calculated. For example, in a case of a transport member in which a plurality of circular through-holes having the same size are formed in a flat surface, the surface area of the recess portion can be calculated from the radius of the through-holes and the number of through-holes.

In addition, for example, in a case of a transport member in which a plurality of protrusions having the same size are formed on a flat surface, the surface area of the protrusion portion can be calculated based on the shape of the protrusion and the number of protrusions.

In a case where the surface area of the recess portion is calculated, the surface area of the protrusion portion can be calculated by subtracting the surface area of the recess portion from the surface area of the entire transport member.

On the other hand, in a case where the surface area of the protrusion portion is calculated, the surface area of the recess portion can be calculated by subtracting the surface area of the protrusion portion from the surface area of the entire transport member.

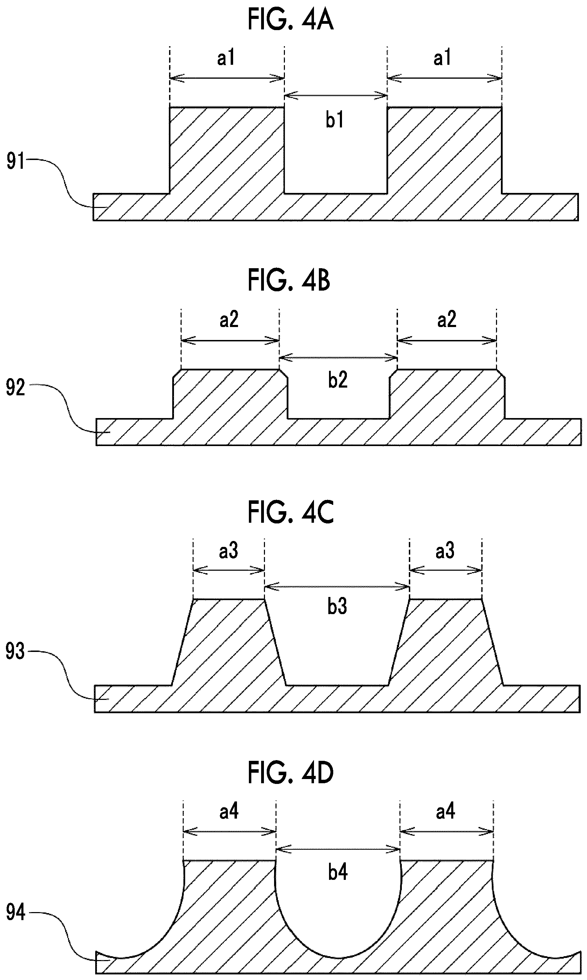

Specifically, a method of calculating the surface area of the recess portion and the surface area of the protrusion portion in a case where a plurality of protrusions having the same size are formed on a flat surface will be described with reference to Figs. 4A to 4G for each shape of the protrusion.

As shown in Fig. 4A, the protrusion of the transport member 91 has a rectangular cross-sectional shape. As shown in Fig. 4B, the protrusion of the transport member 92 has a rectangular cross-sectional shape and is chamfered at corners.

In this case, the surface area of the protrusion portion is the area of the flat portion on the surface of the protrusion.

In Fig. 4A, in a case where the protrusion is formed to extend in the paper surface perpendicular direction, the surface area of the protrusion portion is represented by a product of the width a1, the length of the protrusion extending in the paper surface perpendicular direction, and the number of protrusions.

In Fig. 4B, in a case where the protrusion is formed to extend in the paper surface perpendicular direction, the surface area of the protrusion portion is represented by a product of the width a2, the length of the protrusion extending in the paper surface perpendicular direction, and the number of protrusions.

As shown in Fig. 4C, the protrusion of the transport member 93 has a cross-sectional trapezoidal shape. As shown in Fig. 4D, the protrusion of the transport member 94 has a substantially trapezoidal shape in cross-sectional view.

In this case, the surface area of the protrusion portion is the area of the flat portion on the surface of the protrusion.

In Fig. 4C, in a case where the protrusion is formed to extend in the paper surface perpendicular direction, the surface area of the protrusion portion is represented by a product of the width a3, the length of the protrusion extending in the paper surface perpendicular direction, and the number of protrusions.

In Fig. 4D, in a case where the protrusion is formed to extend in the paper surface perpendicular direction, the surface area of the protrusion portion is represented by a product of the width a4, the length of the protrusion extending in the paper surface perpendicular direction, and the number of protrusions.

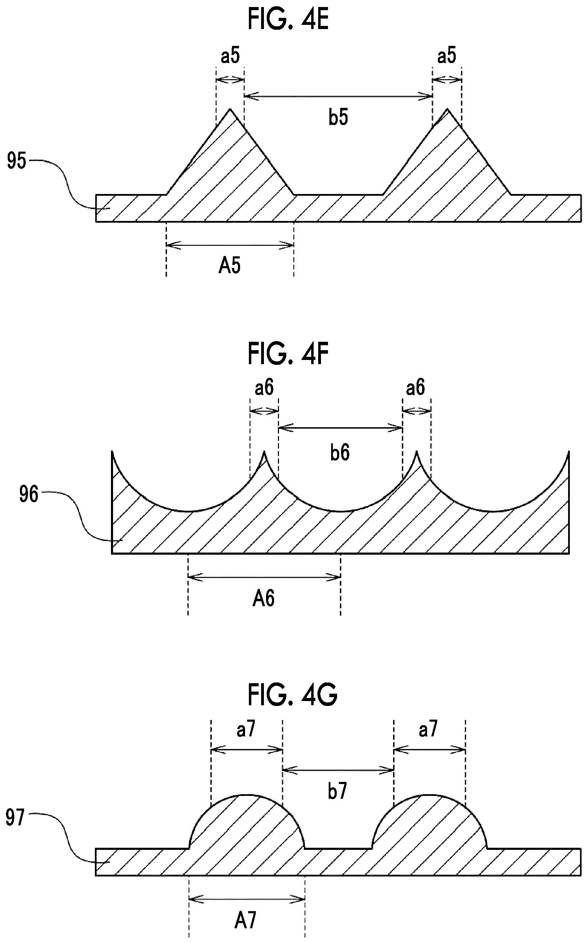

As shown in Fig. 4E, the protrusion of the transport member 95 has a triangular cross-sectional shape. As shown in Fig. 4F, the protrusion of the transport member 96 has a substantially triangular shape in cross-sectional view.

In this manner, in a case where the surface of the protrusion is not flat and the ridge line from an apex to a bottom portion of the protrusion is a straight line, the width of the bottom portion of the protrusion is defined as A5 and the width a5 of the surface of the protrusion is defined as 1/10 of A5. In addition, in a case where the surface of the protrusion is not flat and the ridge line from the apex to the bottom portion of the protrusion is a downward convex curve, the width of the bottom portion of the protrusion is defined as A6 and the width a6 of the surface of the protrusion is defined as 1/10 of A6.

In Fig. 4E, in a case where the protrusion is formed to extend in the paper surface perpendicular direction, the surface area of the protrusion portion is represented by a product of the width a5, the length of the protrusion extending in the paper surface perpendicular direction, and the number of protrusions.

In Fig. 4F, in a case where the protrusion is formed to extend in the paper surface perpendicular direction, the surface area of the protrusion portion is represented by a product of the width a6, the length of the protrusion extending in the paper surface perpendicular direction, and the number of protrusions.

As shown in Fig. 4G, the protrusion of the transport member 97 has a semicircular cross section.

In this manner, in a case where the surface of the protrusion is not flat and the ridge line from an apex to a bottom portion of the protrusion is a downward convex curve, the width of the bottom portion of the protrusion is defined as A7 and the width a7 of the surface of the protrusion is defined as 1/3 of A7.

In Fig. 4G, in a case where the protrusion is formed to extend in the paper surface perpendicular direction, the surface area of the protrusion portion is represented by a product of the width a7, the length of the protrusion extending in the paper surface perpendicular direction, and the number of protrusions.

<Equation (1), Equation (2), Equation (3)>

In the present disclosure, in a case where an amount of the ink applied to the non-permeable substrate per unit area is denoted by V $(g/m^2)$, a thickness of the non-permeable substrate is denoted by t $(\mu m)$, and a width of a portion with a smaller surface area between the protrusion portion and the recess portion of the transport member, is denoted by A $(\mu m)$, V, t, and A satisfy Expression (1).

$$10 \leq (V/t) \times A \leq 4000 \quad \dots(1)$$

In a case where "$(V/t) \times A$" is 10 or more, problems such as formation of wrinkles on the non-permeable substrate, slippage of the non-permeable substrate, sticking of the non-permeable substrate to the transport member, and the like are suppressed, and the transportability is excellent. On the other hand, in a case where "$(V/t) \times A$" is 4000 or less, a temperature difference in the ink film is suppressed, and unevenness of the image is suppressed.

From the viewpoint of suppressing unevenness in the image while maintaining the transportability, it is preferable that V, t, and A satisfy Expression (2).

$$10 \leq (V/t) \times A \leq 2000 \quad ...(2)$$

From the viewpoint of further suppressing unevenness in the image while maintaining the transportability, it is preferable that V, t, and A satisfy Expression (3).

$$10 \leq (V/t) \times A \leq 1000 \quad ...(3)$$

In addition, "(V/t) $\times$ A" is preferably 15 or more. In a case where "(V/t) $\times$ A" is 15 or more, problems such as formation of wrinkles on the non-permeable substrate, slippage of the non-permeable substrate, sticking of the non-permeable substrate to the transport member, and the like are suppressed, and the transportability is more excellent.

[V]

In a case where the ink is applied using an ink jet recording apparatus, the application amount of the ink per unit area with respect to the non-permeable substrate can be adjusted according to the droplet amount, the resolution, the drawing pattern, and the like.

The amount of the ink applied per unit area to the non-permeable substrate is not particularly limited as long as the amount satisfies Expression (1), but is preferably 1 g/m$^2$ to 25 g/m$^2$ and more preferably 2 g/m$^2$ to 20 g/m$^2$.

In a case where the above-described amount of application is 1 g/m$^2$ or more, water is not likely to evaporate, and the transportability is improved.

On the other hand, in a case where the application amount is 25 g/m$^2$ or less, the ink is less likely to flow, and the unevenness of the image is suppressed.

In a case where the ink is an ink containing water and a coagulating agent, the above-described amount of the ink applied is preferably 1 g/m$^2$ to 10 g/m$^2$ and more preferably 1 g/m$^2$ to 5 g/m$^2$.

In addition, in a case where the ink is an ink containing water and a pigment, the above-described amount of the ink applied is preferably 1 g/m$^2$ to 25 g/m$^2$ and more preferably 2 g/m$^2$ to 20 g/m$^2$.

[t]

The thickness of the non-permeable substrate is measured by the following method.

The thicknesses of 10 randomly selected sites in the non-permeable substrate are measured using a film thickness meter. An arithmetic average value of the measured values is obtained, and the obtained value is adopted.

The thickness of the non-permeable substrate is not particularly limited as long as the non-permeable substrate satisfies Expression (1), but is preferably 0.1 $\mu$m to 1,000 $\mu$m, more preferably 0.1 $\mu$m to 800 $\mu$m, still more preferably 1 $\mu$m to 500 $\mu$m, and particularly preferably 10 $\mu$m to 100 $\mu$m.

In a case where the thickness of the non-permeable substrate is 0.1 $\mu$m or more, heat is less likely to be transferred from the transport member, and unevenness of the image is suppressed.

On the other hand, in a case where the thickness of the non-permeable substrate is 1,000 $\mu$m or less, the transportability is excellent by following the surface of the transport member.

[A]

In measuring the width of a portion with a smaller surface area between the recess portion and the protrusion portion of the transport member, the surface areas of the recess portion and the protrusion portion of the transport member are calculated.

Next, the calculated surface area of the recess portion and the calculated surface area of the protrusion portion are compared with each other, and the one with a smaller surface area is specified. In a case where the calculated surface area of the recess portion and the surface area of the protrusion portion are the same, the width of the protrusion portion is adopted.

In a case where the surface area of the recess portion is smaller than the surface area of the protrusion portion by comparing the surface area of the recess portion with the surface area of the protrusion portion, the width of the recess portion is denoted by A.

In a case where the surface area of the protrusion portion is smaller than the surface area of the recess portion by comparing the surface area of the recess portion with the surface area of the protrusion portion, the width of the protrusion portion is denoted by A.

In the present disclosure, the width of the protrusion portion or the recess portion means the maximum value among the lengths along the perpendicular direction and the length along the parallel direction with respect to the transport direction of the non-permeable substrate. In a case where a plurality of recess portions are present in the transport member, an average value of the widths of the recess portions is adopted. Similarly, in a case where a plurality of protrusion portions are present in the transport member, the average value of the widths of the protrusion portions is adopted.

In a case where the recess portions are discontinuously disposed as in the transport member shown in Fig. 3A, the width of the recess portions means the diameter of the circle in a case where the shape of the recess portions is circular.

In a case where a groove is formed along a direction parallel to the transport direction of the non-permeable substrate as in the transport member shown in Fig. 3B, the width of the protrusion portion or the recess portion is the maximum value of the length along the direction perpendicular to the transport direction of the non-permeable substrate. On the other hand, in a case where the groove is formed along a direction perpendicular to the transport direction of the non-permeable substrate, the width of the protrusion portion or the recess portion is the maximum value of the length along the direction parallel to the transport direction of the non-permeable substrate.

In a case where helical grooves are formed in a left-right symmetrical manner from the center of the transport member toward both end portions as in the transport member shown in Fig. 3C, the lengths of the helical grooves in the direction perpendicular to and in the direction parallel to the transport direction of the non-permeable substrate are measured, and the maximum value is adopted as the width.

In addition, for example, in a case of a transport member in which a plurality of protrusions having the same size are formed on a flat surface, the width of the protrusion portion is a1 to a7 shown in Figs. 4A to 4G as described above. The width of the recess portion is a width between adjacent protrusion portions, and is b1 to b7 as shown in Figs. 4A to 4G.

In a case where a plurality of recess portions or protrusion portions are present in the transport member and the width of the recess portion or the protrusion portion is not constant, the average value of the measured values of the respective widths is adopted.

The width of a portion with a smaller surface area between the recess portion and the protrusion portion of the transport member, is not particularly limited as long as it can satisfy Expression (1), but is preferably 10 $\mu$m to 10,000 $\mu$m and more preferably 20 $\mu$m to 5,000 $\mu$m.

In a case where the width is 10 $\mu$m or more, the slippage of the non-permeable substrate is suppressed, and the transportability is excellent.

On the other hand, in a case where the width is 10,000 $\mu$m or less, the unevenness of the image is suppressed.

<Expression (4)>

In the present disclosure, in a case where a surface free energy of the non-permeable substrate is denoted by E1 (mN/m), a surface tension of the ink is denoted by E2 (mN/m), and a value obtained by subtracting E2 from E1 is denoted by $\Delta$E, it is preferable that the following expression (4) is satisfied.

$$\Delta E/E2 \leq 0.50 \ldots (4)$$

In a case where $\Delta$E/E2 is 0.50 or less, the ink is less likely to flow, and the unevenness of the image is suppressed. From the viewpoint of further suppressing the unevenness of the image, it is more preferable that $\Delta$E/E2 is 0.35 or less. The lower limit value of $\Delta$E/E2 is not particularly limited, and is, for example, 0.

As $\Delta$E is smaller, the ink is less likely to flow, and the unevenness of the image is suppressed. Therefore, $\Delta$E is preferably 20 mN/m or less and more preferably 15 mN/m or less. The lower limit value of $\Delta$E is not particularly limited, and is, for example, 0 mN/m.

A preferred range of the surface tension of the ink will be described later.

From the viewpoint of affinity with the ink, the surface free energy of the non-permeable substrate is preferably 30 mN/m to 70 mN/m, and more preferably 30 mN/m to 60 mN/m.

In the present disclosure, the surface free energy is calculated by the Owens-Wendt method.

The surface free energy of the non-permeable substrate is calculated by the Owens-Wendt method using the measured values of the contact angles of water and diiodomethane with respect to the surface of the non-permeable substrate, and the dispersion component and the polar component of water and diiodomethane.

The contact angles of water and diiodomethane with respect to the surface of the non-permeable substrate are measured using a contact angle meter. As the contact angle meter, for example, "DM-501" (product name, manufactured by Kyowa Interface Science Co., Ltd.) can be used.

The Owens-Wendt Method is described in D. K. Owens and R. C. Wendt, Journal of applied polymer science Vol. 13, PP. 1741 to 1747 (1969).

Hereinafter, a specific calculation method will be described. In a case where a liquid is added dropwise to a solid surface (here, a non-permeable substrate), the following expression is satisfied for each parameter at an interface between the solid surface and the liquid.

Equation 1 described below is known as the Young's equation.

Equation 2 described below is known as the Dupre equation.

Equation 3, Equation 4, and Equation 5 described below are known as equations using the Owens-Wendt method.

$$\gamma_S = \gamma_L \cos\theta + \gamma_{SL} \ldots (1)$$

$$W = \gamma_S + \gamma_L - \gamma_{SL} \ldots (2)$$

$$\gamma_S = \gamma_S{}^d + \gamma_S{}^h \ldots (3)$$

$$\gamma_L = \gamma_L{}^d + \gamma_L{}^h \ldots (4)$$

$$W = 2(\gamma_S{}^d \gamma_L{}^d)^{1/2} + 2(\gamma_S{}^h \gamma_L{}^h)^{1/2} \ldots (5)$$

In Equation 1 to Equation 5, the details of each symbol are as follows.

$\theta$      contact angle of liquid with surface of non-permeable substrate
$\gamma_S$      surface free energy of non-permeable substrate
$\gamma_L$      surface free energy of liquid
$\gamma_{SL}$      interface free energy between non-permeable substrate and liquid
$W$      work of adhesion
$\gamma_S{}^d$      dispersion component of surface free energy of non-permeable substrate
$\gamma_S{}^h$      polar component of surface free energy of non-permeable substrate
$\gamma_L{}^d$      dispersion component of surface free energy of liquid
$\gamma_L{}^h$      polar component of surface free energy of liquid

Equation 6 described below is obtained from Equation 1 to Equation 5 described above.

$$(\gamma_S{}^d \gamma_L{}^d)^{1/2} + (\gamma_S{}^h \gamma_L{}^h)^{1/2} = \gamma_L(1 + \cos\theta)/2 \ldots (6)$$

Equation 6A and Equation 6B are established using water and diiodomethane as the liquid in Equation 6.

$$(\gamma_S{}^d \gamma_{L1}{}^d)^{1/2} + (\gamma_S{}^h \gamma_{L1}{}^h)^{1/2} = \gamma_{L1}(1 + \cos\theta 1)/2 \ldots (6A)$$

$$(\gamma_S{}^d \gamma_{L2}{}^d)^{1/2} + (\gamma_S{}^h \gamma_{L2}{}^h)^{1/2} = \gamma_{L2}(1 + \cos\theta 2)/2 \ldots (6B)$$

In Equation 6A and Equation 6B, the details of each symbol are as follows.

$\theta 1$:      contact angle of water with respect to surface of non-permeable substrate
$\theta 2$:      contact angle of diiodomethane with surface of non-permeable substrate
$\gamma_{L1}$      surface free energy of water (72.8 mN/m)
$\gamma_{L1}$      dispersion component of surface free energy of water (21.8 mN/m)
$\gamma_{L1}{}^h$      polar component of surface free energy of water (51.0 mN/m)
$\gamma_{L2}$      surface free energy of diiodomethane (50.8 mN/m)
$\gamma_{L2}{}^d$      dispersion component (50.8 mN/m) of surface free energy of diiodomethane
$\gamma_{L2}{}^h$      polar component of surface free energy of diiodomethane (0 mN/m)

The values in parentheses are values described in the document.

$\theta 1$, $\theta 2$, $\gamma_{L1}$, $\gamma_{L1}d$, $\gamma_{L1}{}^h$ $\gamma_{L2}$, $\gamma_{L2}{}^d$, and $\gamma_{L2}{}^h$ are substituted into Equation 6A and Equation 6B, whereby $\gamma_S{}^d$ and $\gamma_S{}^h$ are

calculated.

As θ1 and θ2, the measured values by the above-described measurement method are used.

By substituting the calculated $\gamma_S^d$ and $\gamma_S^h$ into Expression 3, the surface free energy $\gamma_S$ of the non-permeable substrate is calculated.

<Expression (5)>

In the present disclosure, in a case where a surface free energy of the non-permeable substrate is denoted by E1 (mN/m), a surface tension of the ink is denoted by E2 (mN/m), and a value obtained by subtracting E2 from E1 is denoted by ΔE, it is preferable that the following expression (5) is satisfied.

$$4 \leq (V/t) \times A \times (\Delta E/E2) \leq 1200 \quad \ldots(5)$$

In a case where "(V/t) × A × (ΔE/E2)" is 4 or more, the transportability is improved. On the other hand, in a case where "(V/t) × A × (ΔE/E2)" is 1200 or less, the unevenness of the image is further suppressed.

From the above viewpoint, "(V/t) × A × (ΔE/E2)" is more preferably 6 to 450.

<Ink applying step>

The image recording method of the present disclosure includes a step of applying an ink containing water onto a non-permeable substrate.

(Non-permeable substrate)

In the present disclosure, impermeability of the non-permeable substrate denotes a property that a water absorption rate in 24 hours, which is measured in conformity with ASTM D570-98 (2018), is 2.5% or less. Here, the unit "%" of the water absorption rate is on a mass basis. The above-described water absorption rate is preferably 1.0% or less and more preferably 0.5% or less.

Examples of the material of the non-permeable substrate include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the non-permeable substrate is a resin. That is, it is preferable that the non-permeable substrate is a resin substrate.

Among these, from the viewpoint of general-purpose properties, the material of the non-permeable substrate is preferably polypropylene, polyethylene, polyethylene terephthalate, nylon, an acrylic resin, or polyvinyl chloride.

As a shape of the non-permeable substrate, a sheet-like (film-like) or a plate-like non-permeable substrate is preferable. Examples of the non-permeable substrate having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the non-permeable substrate made of a resin include a resin sheet (resin film), and more specific examples thereof include a flexible packaging material for packaging food or the like, and a panel for guiding the floor of a mass retailer.

Examples of the non-permeable substrate also include a textile (woven fabric) or nonwoven fabric formed of impermeable fibers, in addition to the sheet-like (film-like) or plate-like non-permeable substrate.

The non-permeable substrate may be subjected to a hydrophilization treatment. Examples of the hydrophilization treatment include a corona treatment, a plasma treatment, a flame treatment, a heat treatment, an abrasion treatment, a light irradiation treatment (such as a UV treatment), and a flame treatment, but the hydrophilization treatment is not limited thereto. The corona treatment can be performed, for example, using CORONA MASTER (product name "PS-10S", manufactured by Shinko Electric & Instrumentation Co., Ltd.). The conditions for the corona treatment may be appropriately selected according to the kind of the non-permeable substrate and the like.

The non-permeable substrate may be a non-permeable substrate having transparency.

Here, the expression of "having transparency" denotes that a transmittance in visible light having a wavelength of 400 nm to 700 nm is 80% or more (preferably 90% or more).

In a case where the non-permeable substrate is a non-permeable substrate having transparency, the image is easily visually recognized through the non-permeable substrate from an image non-recorded surface side of the non-permeable substrate.

For example, with the non-permeable substrate having transparency, in a case where a pretreatment liquid, a colored ink described later, and a white ink described later are applied onto the non-permeable substrate in this order to record an image, a colored image (for example, a pattern image such as a character and a figure) with a white image (for example, a solid image) as a background is easily visually recognized through the non-permeable substrate from the image non-recorded surface side of the non-permeable substrate.

(Ink)

Examples of the ink containing water include an ink containing water and a coagulating agent, and an ink containing water and a pigment. Examples of the ink containing water and a pigment include a white ink containing water and a white pigment, and a colored ink containing water and a coloring pigment. Among these, the ink is preferably a white ink containing water and a white pigment.

Here, the coloring pigment means a chromatic pigment (for example, a cyan pigment, a magenta pigment, a yellow pigment, and the like) or a black pigment.

In addition, the colored ink means a chromatic ink (for example, a cyan ink, a magenta ink, a yellow ink, and the like) or a black ink.

In the ink applying step, only one kind of ink containing water and a pigment may be applied onto the non-permeable substrate, or two or more kinds thereof may be applied.

In the ink applying step, the white ink and the colored ink may be applied in this order on the non-permeable substrate.

In this case, the white ink and the colored ink may be applied in this order, or the colored ink and the white ink may be applied in this order.

In addition, the ink applying step may include a step of applying a first ink containing water and a coagulating agent onto the non-permeable substrate and a step of applying a second ink (for example, a white ink and a colored ink) containing water and a pigment onto the non-permeable substrate onto which the first ink has been applied. Specifically, the white ink and the colored ink, which are the second ink, may be applied in this order after the first ink is applied, or the colored ink and the white ink, which are the second ink, may be applied in this order after the first ink is applied.

Hereinafter, preferred aspects of the ink (that is, the second ink) containing water and a pigment will be described.

-Water-

The second ink contains water.

A content of the water is preferably 10% by mass or more, more preferably 20% by mass or more, still more preferably 30% by mass or more, and particularly preferably 50% by mass or more with respect to the total amount of the ink.

The upper limit of the content of water is appropriately determined according to the content of other components, and is, for example, 99% by mass, preferably 95% by mass, and more preferably 90% by mass with respect to the total amount of the second ink.

-Pigment-

The second ink contains a pigment.

In a case where the second ink is a colored ink, the second ink contains a coloring pigment as a pigment.

In a case where the second ink is a white ink, the second ink contains a white pigment as a pigment.

A commercially available organic pigment or inorganic pigment may be used as the coloring pigment.

Examples of the coloring pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In addition, the coloring pigment may be a water-insoluble pigment which can be dispersed in water by a dispersing agent, or may be a self-dispersing pigment.

The self-dispersing pigment is a pigment which can be dispersed in water without using a dispersing agent.

The self-dispersing pigment is, for example, a compound in which at least one selected from the group consisting of a hydrophilic group such as a carbonyl group, a hydroxyl group, a carboxyl group, a sulfo group, and a phosphoric acid group and salts thereof is chemically bonded to a surface of the pigment directly or through another group.

From the viewpoints of the image density and the jettability of the ink, in a case where the second ink contains a coloring pigment, the content of the coloring pigment is preferably in a range of 1% by mass to 20% by mass, more preferably in a range of 1% by mass to 15% by mass, and still more preferably in a range of 1% by mass to 10% by mass with respect to the total amount of the second ink.

Examples of the white pigment include inorganic pigments such as titanium dioxide, barium sulfate, calcium carbonate, silica, zinc oxide, zinc sulfide, mica, talc, and pearl.

The white pigment is preferably titanium dioxide, barium sulfate, calcium carbonate, or zinc oxide, and more preferably titanium dioxide.

From the viewpoint of covering property, an average primary particle diameter of the white pigment is preferably 150 nm or more, and more preferably 200 nm or more. In addition, from the viewpoint of j ettability of the ink, the average primary particle diameter of the white pigment is preferably 400 nm or less, and more preferably 350 nm or less.

In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by the TEM, measuring primary particle diameters of the 50 particles, and averaging the measured diameters. As the transmission electron microscope, a transmission electron microscope 1200EX manufactured by JEOL Ltd. can be used.

From the viewpoints of the image density and jettability, in a case where the second ink contains a white pigment, the content of the white pigment is preferably in a range of 2% by mass to 25% by mass, more preferably in a range of 5% by mass to 25% by mass, and still more preferably in a range of 10% by mass to 20% by mass with respect to the total amount of the second ink.

-Resin-

It is preferable that the second ink contains at least one resin.

The resin in the second ink contributes to film forming property of the ink (that is, formability of the ink film).

A weight-average molecular weight (Mw) of the resin is preferably 1,000 to 300,000, more preferably 2,000 to 200,000, and still more preferably 5,000 to 100,000.

In the present disclosure, the weight-average molecular weight (Mw) means a value measured according to gel permeation chromatography (GPC), unless otherwise specified.

For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID x 15 cm, manufactured by Tosoh Corporation) are used as a column, and tetrahydrofuran (THF) is used as an eluant. In addition, as the measurement conditions, a sample concentration of 0.45% by mass, a flow rate of 0.35 ml/min, a sample injection amount of 10 $\mu$l, and a measurement temperature of 40°C are set, and a RI detector is used.

The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

Examples of the resin include a pigment dispersing resin as a dispersing agent.

Examples of the resin also include resin particles.

The second ink may contain at least one pigment dispersing resin.

The pigment dispersing resin is a resin having a function of dispersing a pigment.

The pigment dispersing resin may be a random copolymer or a block copolymer.

The pigment dispersing resin may have a crosslinking structure.

The second ink may be prepared using a pigment dispersion liquid containing a pigment and a pigment dispersing resin.

As the pigment dispersing resin, for example, known polymer dispersing agents, such as polymer dispersing agents described in paragraphs 0029 to 0106 of WO2021/221069A, can be used.

In a case where the second ink contains the pigment dispersing resin, a ratio of a content of the pigment and a content of the pigment dispersing resin in the second ink is preferably 1:0.04 to 1:3, more preferably 1:0.05 to 1:1, and still more preferably 1:0.05 to 1:0.5 on a mass basis.

In a case where the second ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the second ink.

The second ink may contain at least one kind of resin particles.

A resin constituting the resin particles is preferably a water-insoluble resin. The "water-insoluble" in the water-insoluble resin means a property that an amount dissolved in 100 g of distilled water at 25°C is less than 2 g.

The volume average particle diameter of the resin particles is preferably 1 nm to 300 nm, more preferably 3 nm to 200 nm, and further preferably 5 nm to 150 nm.

In the present disclosure, the volume average particle diameter means a value measured using a laser diffraction/scattering type particle size distribution analyzer.

As the measuring device, a particle size distribution measuring device "MICROTRAC MT-3300II" (manufactured by Nikkiso Co., Ltd.) is exemplified.

It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.

In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

From the viewpoint of further improving rub resistance of the image, a glass transition temperature (Tg) of the resin particles is preferably 50°C to 250°C and more preferably 50°C to 150°C.

Here, a measurement Tg obtained by actual measurement is employed as the glass transition temperature (Tg) of the resin particles. A method of measuring the measurement Tg can refer to paragraph 0111 of JP2015-25076A.

For the resin particles, for example, descriptions described in paragraphs 0038 to 0114 of WO2021/192720A and paragraphs 0109 to 0120 of JP2015-25076A may be referred to.

In a case where the second ink contains the resin particles, a content of the resin particles in the second ink is preferably 1% by mass to 20% by mass, more preferably 2% by mass to 15% by mass, and still more preferably 2% by mass to 10% by mass with respect to the total amount of the second ink.

-Water-soluble organic solvent-

It is preferable that the second ink contains at least one water-soluble organic solvent.

In this manner, jetting stability from the ink jet head is ensured.

The water-soluble organic solvent contained in the second ink may be used alone or in combination of two or more kinds thereof.

In the present disclosure, "water-soluble" in the "water-soluble organic solvent" means a property of being dissolved in 1 g or more in 100 g of water at 25°C.

The type of the water-soluble organic solvent which can be contained in the second ink is not particularly limited, and examples thereof include:

monoalcohol having 1 to 4 carbon atoms;
diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol;
triol such as glycerin, 1,2,6-hexanetriol, and trimethylolpropane;
alkylene glycol such as ethylene glycol and propylene glycol;
alkylene glycol monoalkyl ether such as ethylene glycol monoalkyl ether and propylene glycol monoalkyl ether;
polyalkylene glycol such as diethylene glycol, triethylene glycol, tetraethylene glycol, pentaethylene glycol, dipropylene glycol, and polyoxyethylene polyoxypropylene glycol;
polyalkylene glycol ether such as diethylene glycol monoalkyl ether, triethylene glycol monoalkyl ether, tripropylene glycol monoalkyl ether, and polyoxypropylene glyceryl ether; and
2-pyrrolidone and N-methyl-2-pyrrolidone.

From the viewpoint of the jetting stability, it is preferable that the water-soluble organic solvent in the second ink includes at least one selected from the group consisting of alkylene glycol and alkylene glycol monoalkyl ether.

A content of the water-soluble organic solvent is preferably 10% by mass to 40% by mass and more preferably 15% by mass to 30% by mass with respect to the total amount of the second ink.

-Additive-

The second ink may contain an additive such as a surfactant, a water-soluble resin, a co-sensitizer, an ultraviolet absorbing agent, an antioxidant, a discoloration preventer, a conductive salt, and a basic compound, as necessary.

-Physical properties-

From the viewpoint of improving the jetting stability, a pH (25°C) of the second ink is preferably 7 to 10 and more preferably 7.5 to 9.5.

The pH of the second ink is measured at 25°C using a pH meter, for example, a pH meter (product name "WM-50EG") manufactured by DKK-TOA CORPORATION.

A viscosity (25°C) of the second ink is preferably 0.5 mPa·s to 30 mPa·s, more preferably 2 mPa·s to 20 mPa·s, even more preferably 2 mPa·s to 15 mPa·s, and particularly preferably 3 mPa·s to 10 mPa·s.

The viscosity of the second ink is measured at 25°C using a viscometer, for example, a TV-22 type viscometer manufactured by TOKI-SANGYO CO., LTD.

The surface tension of the second ink is preferably 60 mN/m or less, more preferably in a range of 20 mN/m to 50 mN/m, and still more preferably in a range of 25 mN/m to 40 mN/m.

The surface tension of the second ink is measured at 25°C using a surface tension meter, for example, by a plate method using an automatic surface tension meter (trade name, "CBVP-Z") manufactured by Kyowa Interface Science Co., Ltd.

Hereinafter, preferred aspects of the ink (that is, the first ink) containing water and a coagulating agent will be described.

-Water-

The first ink contains water.

The content of water is preferably 50% by mass or more and more preferably 60% by mass or more with respect to the total amount of the first ink.

The upper limit of the content of water depends on the amount of other components, but is preferably 90% by mass or less and more preferably 80% by mass or less with respect to the total amount of the first ink.

-Coagulating agent-

The first ink contains at least one coagulating agent.

The coagulating agent in the first ink coagulates the components in the ink on the non-permeable substrate. As a result, image quality of the image can be improved.

It is preferable that the coagulating agent is at least one selected from the group consisting of an organic acid, a polyvalent metal compound, a metal complex, and a cationic polymer.

Preferred examples of the coagulating agent also include coagulating agents described in paragraphs 0122 to 0130 of WO2020/195360A.

Hereinafter, preferred aspects of each of the organic acid, the polyvalent metal compound, the metal complex, and the cationic polymer, which can be used as the coagulating agent, will be described.

--Organic acid--

Examples of the organic acid include an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the coagulation rate of the ink, as the acidic group, a phosphoric acid group or a carboxy group is preferable, and a carboxy group is more preferable.

Further, it is preferable that at least a part of the acidic group is dissociated in the first ink.

Examples of the organic acid include, as an organic compound having a carboxy group, (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of coagulation rate of the ink, as the organic compound having a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.

It is preferable that the organic acid has a low pKa (for example, 1.0 to 5.0). As a result, surface charge of particles of, for example, the pigment stably dispersed in the ink by a weakly acidic functional group such as a carboxy group, resin particles, and the like can be reduced by bringing the ink into contact with the organic acid having a lower pKa to degrade dispersion stability.

It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

--Polyvalent metal compound--

Examples of the polyvalent metal compound include a polyvalent metal salt.

Examples of the polyvalent metal salt include an organic acid polyvalent metal salt and an inorganic acid polyvalent metal salt.

As the organic acid polyvalent metal salt, a polyvalent metal salt of the above-described organic acid (for example, formic acid, acetic acid, or benzoic acid) is preferable.

As the inorganic acid polyvalent metal salt, a nitric acid polyvalent metal salt, a hydrochloric acid polyvalent metal salt, or a thiocyanic acid polyvalent metal salt) is preferable.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

Further, it is preferable that at least a part of the polyvalent metal compound is dissociated into polyvalent metal ions and counter-ions in the first ink.

--Metal complex--

It is preferable that the metal complex contains at least one selected from the group consisting of zirconium, aluminum, and titanium as a metal element.

As the metal complex, a metal complex containing, as a ligand, at least one selected from the group consisting of acetate, acetylacetonate, methylacetoacetate, ethylacetoacetate, octylene glycolate, butoxyacetylacetonate, lactate, a lactate ammonium salt, and triethanol aminate is preferable.

The metal complex may be a commercially available product. Various organic ligands, particularly various multidentate ligands which are capable of forming metal chelate catalysts are commercially available. Therefore, the metal complex may be a metal complex prepared by combining a commercially available organic ligand with a metal.

--Cationic polymer--

It is preferable that the cationic polymer is a homopolymer of a cationic monomer having a primary to tertiary amino group or a quaternary ammonium base, or a copolymer or a condensed polymer of a cationic monomer and a non-cationic monomer. The cationic polymer may be used in any form of a water-soluble polymer or a water-insoluble polymer (that is, latex particles).

Examples of the cationic polymer include polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of the viscosity of the first ink, it is preferable that the weight-average molecular weight of the cationic polymer is small. **In** a case where the first ink is applied onto a resin substrate by an ink jet recording method, the weight-average molecular weight thereof is preferably 1,000 to 500,000, more preferably 1,500 to 200,000, and still more preferably 2,000 to 100,000. It is advantageous that the weight-average molecular weight thereof is 1,000 or more from the viewpoint of coagulation rate. It is advantageous that the weight-average molecular weight thereof is 500,000 or less from the viewpoint of jetting reliability. However, in a case where the first ink is applied to the resin substrate by a method other than the ink jet recording method, the present invention is not limited thereto.

The content of the coagulating agent in the first ink is preferably in a range of 0.1% by mass to 40% by mass, more preferably in a range of 0.1% by mass to 30% by mass, still more preferably in a range of 1% by mass to 20% by mass, and particularly preferably in a range of 1% by mass to 10% by mass with respect to the total amount of the first ink.

-Resin-

The first ink contains at least one resin.

The resin in the first ink contributes to the film forming property of the first ink (that is, the formability of the first ink film).

As the resin in the first ink, the same resin (for example, resin particles) as the resin in the second ink can be used.

The content of the resin in the first ink is not particularly limited.

The content of the resin is preferably 0.5% by mass to 30% by mass, more preferably 1% by mass to 20% by mass, and particularly preferably 1% by mass to 15% by mass with respect to the total amount of the first ink.

-Water-soluble organic solvent-

The first ink may contain at least one water-soluble organic solvent.
As the water-soluble organic solvent in the first ink, the same water-soluble organic solvent as the water-soluble organic solvent which can be contained in the ink can be used.

-Additive-

The ink may contain an additive such as a surfactant, a water-soluble resin, a co-sensitizer, an ultraviolet absorbing agent, an antioxidant, a discoloration preventer, a conductive salt, and a basic compound, as necessary.

-Physical properties-

The pH of the first ink is preferably 2.0 to 7.0 and more preferably 2.0 to 4.0. The pH of the first ink is measured by the same method as the pH of the second ink.
From the viewpoint of coating properties of the first ink, the viscosity of the first ink is preferably 0.5 mPa·s to 10 mPa·s, and more preferably 1 mPa·s to 5 mPa·s. The viscosity is a value measured at 25°C using a viscometer. The viscosity of the first ink is measured by the same method as the viscosity of the second ink.
The surface tension of the first ink is preferably 60 mN/m or less, more preferably in a range of 20 mN/m to 50 mN/m, and still more preferably in a range of 30 mN/m to 45 mN/m. The surface tension is a value measured at a temperature of 25°C. The surface tension of the first ink is measured by the same method as the surface tension of the second ink.

(Method of applying ink)

A method of applying the ink is not particularly limited, and examples thereof include known methods such as a coating method, a dipping method, and an ink jet recording method.
Examples of the coating method include known methods using a bar coater, an extrusion die coater, an air doctor coater, a blade coater, a rod coater, a knife coater, a squeeze coater, a reverse roll coater, or the like.
It is preferable that the first ink is applied by a coating method.
It is preferable that the second ink (for example, the white ink and the colored ink) is applied by an ink jet method.
The ejection method of the ink by the ink jet method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming air bubbles, and using generated pressure, and the like may be used.
As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.
The application of the ink onto the non-permeable substrate by the ink jet recording method can be performed by allowing the ink to be jetted from a nozzle of an ink jet head.
The way of using the ink jet head also includes a shuttle method of performing recording while a short serial head is allowed to scan in the width direction of the recorded medium, and a line method of using a line head in which recording elements are disposed correspondingly to the entire range of one side of the recorded medium.
In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.
The ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

From the viewpoint of obtaining an image with high definition, a droplet amount of the ink is preferably 1 picoliter (pL) to 10 pL and more preferably 1.5 pL to 6 pL.

<Transporting step>

The image recording method of the present disclosure includes a step of transporting a non-permeable substrate onto which the ink is applied, using a transport member having an uneven surface.

The details of the transport member having an uneven surface are as described above.

In a case where an ink containing water and a pigment is applied onto a non-permeable substrate, the non-permeable substrate onto which the ink containing water and a pigment is applied is transported using a transport member having an uneven surface.

In a case where the ink applying step includes a step of applying the first ink onto the non-permeable substrate and a step of applying the second ink onto the non-permeable substrate onto which the first ink has been applied, in the transporting step, it is preferable that the non-permeable substrate onto which the first ink has been applied is transported using a transport member having an uneven surface. In the transporting step, in a case where the first ink is transported using a transport member having an uneven surface, and an amount of the first ink applied per unit area with respect to the non-permeable substrate is denoted by V, it is preferable that V, t, and A satisfy Expression (1).

In a case where the second ink is applied onto the non-permeable substrate onto which the first ink has been applied, the non-permeable substrate onto which the second ink has been applied may be transported using a transport member having an uneven surface, or may be transported using another transport member.

The factor that causes the unevenness of the image is that a temperature difference occurs in the ink film in the transporting step.

In a case where a temperature difference occurs in the ink film, the components contained in the ink are not uniformly solidified, and unevenness of the image occurs. For example, in an ink containing water and a pigment, the pigment is not uniformly solidified, and a difference in concentration of the pigment occurs in the ink film, which causes unevenness of the image. In addition, in the ink (that is, the first ink) containing water and a coagulating agent, the coagulating agent is not uniformly solidified, and a concentration difference of the coagulating agent occurs in the first ink film. In a case where the second ink containing water and a pigment is applied onto the first ink film having a difference in the concentration of the coagulating agent, a difference in the concentration of the pigment occurs in the second ink film, which causes unevenness in the image.

It is considered that a temperature difference in the ink film is likely to occur in a case where there is a temperature difference between the protrusion portion of the transport member and the non-permeable substrate and in a case where there is a temperature difference between the protrusion portion and the recess portion of the transport member. In the former case, in the non-permeable substrate, the temperature of the contact portion with the protrusion portion changes, and the temperature change is transmitted from the non-permeable substrate to the ink film, so that a temperature difference occurs in the ink film. In the latter case, in the non-permeable substrate, the temperature of a portion near the recess portion changes, and the temperature change is transmitted from the non-permeable substrate to the ink film, so that a temperature difference occurs in the ink film.

From the viewpoint of suppressing the unevenness of the image, it is preferable that a temperature difference between the protrusion portion of the transport member and the non-permeable substrate is 2°C or less immediately before the transporting step.

In addition, from the viewpoint of suppressing the unevenness of the image, it is preferable that a temperature difference between the protrusion portion and the recess portion of the transport member is 5°C or less immediately before the transporting step.

Since it is preferable that there is no temperature difference, the lower limit value of the temperature difference is 0°C.

The temperature of the non-permeable substrate is the temperature of the non-permeable substrate on the side on which the ink film is formed.

In a case where the temperature of the non-permeable substrate on the side where the ink film is formed and the temperature of the non-permeable substrate on the side where the ink film is not formed are different from each other, an average value of both is defined as the temperature of the non-permeable substrate.

The temperature of the non-permeable substrate can be measured using a non-contact infrared temperature sensor.

In addition, the temperature of the protrusion portion and the recess portion of the transport member can also be measured using a non-contact infrared temperature sensor. However, in a case where measurement with a non-contact infrared temperature sensor is difficult, a thermocouple or thermography may be used. In addition, immediately before the transporting step, in a case where it is difficult to perform measurement in a dynamic state, the measurement may be performed in a state where the transport is stopped.

<Heating step>

The image recording method of the present disclosure includes a step of heating the non-permeable substrate.

The heating step is preferably performed after the ink applying step, and may be performed before the transporting step, at the same time as the transporting step, or after the transporting step.

In the heating step, water in the ink applied onto the non-permeable substrate evaporates, and an ink film is formed. In a case where the heating step is performed before the transporting step, the ink film is solidified to some extent in a stage of transporting the ink using the transport member having an uneven surface, and the unevenness of the image is further suppressed.

The aspect in which the heating step is performed at the same time as the transporting step is, for example, a case where the transport is performed using a transport member having a heating mechanism.

The method of heating the non-permeable substrate is not particularly limited, and examples thereof include a method of irradiating the non-permeable substrate with infrared rays (IR), a method of applying hot air (for example, a dryer or the like) to the non-permeable substrate, and a method of heating the non-permeable substrate using a heating device (for example, a heater, a hot plate, or a heating furnace).

The method of heating the non-permeable substrate may be a method in which two or more of these methods are combined.

The non-permeable substrate can be heated from at least one of the image recording surface side or the image non-recorded surface side of the non-permeable substrate.

The heating temperature is preferably 35°C or higher, more preferably 40°C or higher, still more preferably 50°C or higher, and particularly preferably 60°C or higher.

The upper limit value of the heating temperature is not particularly limited, but is preferably 100°C and more preferably 90°C.

The heating time is not particularly limited, but is preferably 1 second to 180 seconds and more preferably 1 second to 120 seconds.

Examples

Hereinafter, examples of the present disclosure will be described, but the present disclosure is not limited to the following examples.

<Preparation of first ink>

The following components were mixed to prepare a first ink. The surface tension of the first ink was 35 mN/m.

-Composition of first ink-

· Glutaric acid [coagulating agent]
... 6.1% by mass
· Propylene glycol (PG) [water-soluble organic solvent]
... 20% by mass
· OLFINE E1010 (manufactured by Nissin Chemical Industry Co., Ltd.) [surfactant]
... 0.5% by mass
· SUPERFLEX 500M (manufactured by DKS Co., Ltd.) [aqueous dispersion of urethane resin particles]
... 7.0% by mass
· Triisopropanolamine [pH adjuster]
... 0.2% by mass
· BYK024 (manufactured by BYK-Chemie GmbH) [antifoaming agent]
... 0.01% by mass
· Ultrapure water
... remaining amount such that total amount of first ink reached 100% by mass

<Preparation of second ink (white ink W1)>

(Preparation of white ink W1)

The following components were mixed to prepare a white ink W1. The surface tension of the white ink W1 was 35 mN/m.

-Composition of White Ink W1-

· White pigment dispersion liquid 1 shown below
... 17% by mass in terms of content of the white pigment
· Propylene glycol (PG) [water-soluble organic solvent]
... 28% by mass
· Propylene glycol monomethyl ether (PGmME) [water-soluble organic solvent]
... 5% by mass
· OLFINE E1010 (manufactured by Nissin Chemical Industry Co., Ltd.) [acetylene glycol-based surfactant]
... 0.60% by mass
· BYK-3450 (manufactured by BYK-Chemie GmbH) [silicone-based surfactant]
... 0.75% by mass
· BYK024 (manufactured by BYK-Chemie GmbH) [antifoaming agent]
... 0.02% by mass
· SOLSPERSE 43000 (manufactured by Lubrizol Japan Ltd.) [polymer dispersing agent]
... 0.75% by mass
· Joncryl JDX-6180 (manufactured by BASF SE) [water-soluble polymer]
... 1.1% by mass
· PVP-K15 (polyvinylpyrrolidone K15)
... 0.12% by mass
· SNOWTEX XS (manufactured by Nissan Chemical Corporation) [colloidal silica dispersion liquid]
... 0.1% by mass in terms of content of colloidal silica particles
· Water
... remaining amount of white ink W1 such that total amount of white ink is 100% by mass

(Preparation of white pigment dispersion liquid 1 (containing block polymer dispersing agent))

-Synthesis of block polymer dispersing agent 1-

A block polymer dispersing agent 1 was synthesized as a pigment dispersing agent for the white pigment dispersion liquid 1 with reference to Synthesis Example 8 of JP2015-83688A. The details are described below.

Diethylene glycol dimethyl ether (266 parts by mass; polymerization solvent),
2-iodo-2-cyanopropane (6.2 parts by mass; polymerization initiation compound),
methyl methacrylate (MMA) (120 parts by mass; monomer), acrylic acid (AA) (28.8 parts by mass; monomer),
cyclohexyl methacrylate (CHMA) (67.2 parts by mass; monomer),
azobismethyl isovaleronitrile (7.9 parts by mass), and
2-t-butyl-4,6-dimethylphenol (0.7 parts by mass; catalyst) were added to a reactor of a 1 L separable flask equipped with a stirrer, a backflow condenser, a thermometer, and a nitrogen introduction pipe, and the mixture was stirred while flowing nitrogen.

Next, the temperature (reaction temperature) of the mixture in the reactor was increased to 70°C, and the mixture was polymerized for 3 hours, thereby obtaining a polymerization solution A containing an MMA/AA/CHMA copolymer.
After 3 hours, as a result of sampling a part of the polymerization solution A and measuring the solid content, the solid content was 42.0% by mass, and thus it was confirmed that most of the monomers were polymerized.
Further, in a case where the molecular weight of the MMA/AA/CHMA copolymer was measured by GPC, the weight-average molecular weight (Mn) was 7,500.
The acid value of this MMA/AA/CHMA copolymer was 101.0 mgKOH/g.
Next, a mixture of benzyl methacrylate (BzMA) (35.2 parts by mass; monomer) and V-65 (0.3 parts by mass; radical generating agent) was added to the polymerization solution A, and the mixture was polymerized at 70°C for 3 hours to obtain a polymerization solution B containing the block polymer dispersing agent 1.

Here, the block polymer dispersing agent 1 is a block polymer containing an A block which is an MMA/AA/CHMA copolymer and a B block which is a BzMA homopolymer.

As a result of measurement of the solid content in the obtained polymerization solution B, the solid content thereof was 43.2% by mass and it was confirmed that most of the monomers were polymerized.

In addition, the Mw of the block polymer dispersing agent 1 was 8,500, and the acid value thereof was 89.3 mgKOH/g.

-Preparation of White Pigment Dispersion Liquid 1-

The above-described block polymer dispersing agent 1 (136.4 parts by mass), butyl carbitol (163.6 parts by mass), and C. I. Pigment White 6 (trade name "JR-405", manufactured by Tayca Corporation, rutile type titanium dioxide particles) (450 parts by mass) as a white pigment were blended and stirred with a disperser. Next, the white pigment was sufficiently dispersed using a horizontal media disperser, thereby obtaining an oil-based pigment dispersion liquid. The average particle diameter of the white pigment dispersed in the oil-based pigment dispersion liquid was 290 nm. The viscosity of the oil-based pigment dispersion liquid was 86.3 mPa·s.

Next, a mixed solution consisting of potassium hydroxide (4.0 parts by mass) and water (341 parts by mass) was gradually added to the oil-based pigment dispersion liquid (700 parts by mass) while being stirred using a disperser, and the solution was neutralized. Thereafter, the white pigment was sufficiently dispersed using a horizontal media disperser, thereby obtaining a pigment dispersion liquid.

Next, ultrafiltration was performed by allowing ion exchange water to flow through the obtained pigment dispersion liquid at a flow rate of 600 mL per minute using an ultrafiltration device (cross-flow type ultrafilter (UF), manufactured by Sartorius AG). The liquid temperature was maintained at 25°C, and the ultrafiltration was performed ten times by setting one time the volume of the charged liquid to once. Ion exchange water was added to obtain a white pigment dispersion liquid 1 in which the concentration of the white pigment was 45% by mass and the concentration of the block polymer dispersing agent 1 was 3.7% by mass.

<Preparation of image recording apparatus>

As an image recording apparatus, the image recording apparatus shown in Fig. 1 was prepared.

As a pretreatment liquid applying device for applying the first ink, a gravure coater was used.

The drying method in the pretreatment liquid drying device was hot air drying.

24 0.8 mm slit nozzles were disposed at a temperature of 80°C, a wind speed of 20 m/sec, and a width of 830 mm.

The jetting conditions of the second ink are as follows.

· Resolution: 1200 dpi (dot per inch, 1 inch is 2.54 cm) × 1200 dpi
· Ink droplet amount: 3.0 pL

<Preparation of non-permeable substrate>

A non-permeable substrate shown below was prepared.

· Polyethylene terephthalate (PET) film "TAIKO Polyester Film FE2001 (thickness: 12 μm)", manufactured by Futamura Chemical Co., Ltd.
· Polyethylene terephthalate (PET) film "TAIKO Polyester Film FE2001 (thickness: 50 μm)", manufactured by Futamura Chemical Co., Ltd.
· Biaxially oriented polypropylene (OPP) film "TAIKO polypropylene film FOR-AQ (thickness: 20 μm)", manufactured by Futamura Chemical Co., Ltd.

<Preparation of transport member>

· Transport member H1: A transport member (vertical groove roller) in which a groove is formed along a direction parallel to a transport direction of the non-permeable substrate shown in Fig. 3B. In a case where a width of a portion with a smaller surface area between the recess portion and the protrusion portion of the transport member, was denoted by A, a transport member in which A was 30 μm to 10,000 μm was prepared.
· Transport member H2: A transport member (double helical roller) in which helical grooves are formed in a left-right symmetrical manner from the center of the transport member toward both end portions as shown in Fig. 3C. In a case where a width of a portion with a smaller surface area between the recess portion and the protrusion portion of the transport member, was denoted by A, a transport member in which A was 30 $\mu$m to 10,000 $\mu$m was prepared.

· Transport member H3: A transport member (round hole suction roller in which a plurality of round holes are formed on the surface as shown in Fig. 3A. In a case where a width of a portion with a smaller surface area between the recess portion and the protrusion portion of the transport member, was denoted by A, a transport member in which A was 100 $\mu$m to 5,200 $\mu$m was prepared.

<Image recording>

In Examples 1 to 11 and Comparative Examples 1 to 4, the image recording apparatus, the first ink, and the second ink (white ink W1) were used. The first ink was applied onto the non-permeable substrate, and then the second ink (white ink W1) was applied in the form of solid image to obtain an image recorded material. The amount of the first ink applied per unit area was adjusted to the value shown in Table 1.

In Examples 12 to 71 and Comparative Examples 5 to 11, the image recording apparatus and the white ink W1 were used. The white ink W1 was applied onto the non-permeable substrate in the form of solid image, thereby obtaining an image recorded material. The application amount of the white ink W1 per unit area was adjusted to the value shown in Table 1.

In Examples 36, 37, 39, 43, 44, and 46, the content of the surfactant in the white ink W1 was changed so that the surface tension was adjusted to the value shown in Table 1.

In addition, in Examples 40 to 42 and 47 to 49, the surface of the biaxially oriented polypropylene (OPP) film was subjected to a corona treatment, and the discharge amount was adjusted so that the surface free energy was adjusted to the value shown in Table 1.

The transportability in the image recording and the image unevenness in the obtained image recorded material were evaluated. The evaluation method was as follows.

<Transportability>

The non-permeable substrate was transported 2,000 m at a speed of 50 m/min, and evaluated according to the following standards from the viewpoint of meandering and transport damage. The meandering amount of the substrate was measured as a displacement width of the substrate edge sensor. The degree of the transport damage was evaluated by visually observing the degree of damage in a case where the non-image recording portion of the wound non-permeable substrate was viewed through the non-image recording portion. The evaluation standard was as follows.

A: The amount of meandering is within ± 0.2 mm, and there is no transport damage or the transport damage is 10 mm or less.

B: The amount of meandering is within ± 0.4 mm, and the transport damage is more than 10 mm and 20 mm or less, or the transport damage is visible only at a specific angle.

C: The amount of meandering is more than ± 0.4 mm, or the transport damage is more than 20 mm, or the transport damage is visible regardless of the angle.

<Image unevenness>

A density step chart of 3C (CMY) mixed color was output, and whether or not unevenness derived from the uneven shape of the transport member is visible was visually determined in the image. The evaluation standard was as follows.

AA: Image unevenness was not visible.

A: Image unevenness was slightly visible, but was not substantially noticeable.

B: image unevenness is visible only at a specific angle or is not visible in a case where the image was viewed in a case of being separated by 2 m or more.

C: The image unevenness is visible regardless of the angle, or is visible even in a case where the image was viewed in a case of being separated by 2 m or more.

The evaluation results are shown in Tables 1 to 3.

**In** the table, V means an amount of the ink applied per unit area, the ink being directly applied to the non-permeable substrate. t means the thickness of the non-permeable substrate. A means the width of the smaller surface area between the recess portion and the protrusion portion of the transport member. $T^B/T^A$ means a ratio in a case where, in the protrusion portion and the recess portion of the transport member, a larger surface area is denoted as $T^A$ and a smaller

**EP 4 624 183 A1**

surface area is denoted as $T^B$. E1 means the surface free energy of the non-permeable substrate. E2 means the surface tension of the ink directly applied onto the non-permeable substrate.

**25**

[Table 1]

| | Transport member | V | t | A | (V/t) × A | $T^B/T^A$ | E1 | E2 | ΔE(E1-E2) | ΔE/E2 | (V/t) × A × ΔE/E2 | Evaluation | |
|---|---|---|---|---|---|---|---|---|---|---|---|---|---|
| | | g/m² | μm | μm | × A | | mN/m | mN/m | mN/m | | | Transport defect | Image unevenness |
| Example 1 | H1 | 3 | 50 | 10000 | 600 | 0.20 | 50 | 35 | 15 | 0.43 | 257 | A | AA |
| Example 2 | H1 | 3 | 50 | 3000 | 180 | 0.20 | 50 | 35 | 15 | 0.43 | 77 | A | AA |
| Example 3 | H1 | 3 | 50 | 500 | 30 | 0.20 | 50 | 35 | 15 | 0.43 | 13 | A | AA |
| Example 4 | H1 | 3 | 50 | 200 | 12 | 0.20 | 50 | 35 | 15 | 0.43 | 5 | B | AA |
| Comparative Example 1 | H1 | 3 | 50 | 100 | 6 | 0.20 | 50 | 35 | 15 | 0.43 | 3 | C | AA |
| Example 5 | H1 | 3 | 20 | 10000 | 1500 | 0.20 | 50 | 35 | 15 | 0.43 | 643 | A | A |
| Example 6 | H1 | 3 | 20 | 500 | 75 | 0.20 | 50 | 35 | 15 | 0.43 | 32 | A | AA |
| Example 7 | H1 | 3 | 20 | 100 | 15 | 0.20 | 50 | 35 | 15 | 0.43 | 6 | A | AA |
| Comparative Example 2 | H1 | 3 | 20 | 50 | 8 | 0.20 | 50 | 35 | 15 | 0.43 | 3 | C | AA |
| Comparative Example 3 | H1 | 3 | 20 | 30 | 5 | 0.20 | 50 | 35 | 15 | 0.43 | 2 | C | AA |
| Example 8 | H1 | 3 | 12 | 10000 | 2500 | 0.20 | 50 | 35 | 15 | 0.43 | 1071 | A | A |
| Example 9 | H1 | 3 | 12 | 3000 | 750 | 0.20 | 50 | 35 | 15 | 0.43 | 321 | A | AA |
| Example 10 | H1 | 3 | 12 | 100 | 25 | 0.20 | 50 | 35 | 15 | 0.43 | 11 | A | AA |
| Example 11 | H1 | 3 | 12 | 50 | 13 | 0.20 | 50 | 35 | 15 | 0.43 | 5 | B | AA |
| Comparative Example 4 | H1 | 3 | 12 | 30 | 8 | 0.20 | 50 | 35 | 15 | 0.43 | 3 | C | AA |
| Example 12 | H1 | 8 | 50 | 10000 | 1600 | 0.20 | 50 | 35 | 15 | 0.43 | 686 | A | A |
| Example 13 | H1 | 8 | 50 | 3000 | 480 | 0.20 | 50 | 35 | 15 | 0.43 | 206 | A | AA |
| Example 14 | H1 | 8 | 50 | 100 | 16 | 0.20 | 50 | 35 | 15 | 0.43 | 7 | A | AA |
| Comparative Example 5 | H1 | 8 | 50 | 50 | 8 | 0.20 | 50 | 35 | 15 | 0.43 | 3 | C | AA |
| Comparative Example 6 | H1 | 8 | 50 | 30 | 5 | 0.20 | 50 | 35 | 15 | 0.43 | 2 | C | AA |
| Example 15 | H1 | 8 | 20 | 10000 | 4000 | 0.20 | 50 | 35 | 15 | 0.43 | 1714 | A | B |
| Example 16 | H1 | 8 | 20 | 5000 | 2000 | 0.20 | 50 | 35 | 15 | 0.43 | 857 | A | A |
| Example 17 | H1 | 8 | 20 | 3000 | 1200 | 0.20 | 50 | 35 | 15 | 0.43 | 514 | A | A |
| Example 18 | H1 | 8 | 20 | 100 | 40 | 0.20 | 50 | 35 | 15 | 0.43 | 17 | A | AA |
| Example 19 | H1 | 8 | 20 | 30 | 12 | 0.20 | 50 | 35 | 15 | 0.43 | 5 | B | AA |

26

(continued)

| | Transport member | V g/m² | t µm | A µm | (V/t) × A | T$^B$/T$^A$ | E1 mN/m | E2 mN/m | ΔE(E1-E2) mN/m | ΔE/E2 | (V/t) × A × ΔE/E2 | Evaluation | |
|---|---|---|---|---|---|---|---|---|---|---|---|---|---|
| | | | | | | | | | | | | Transport defect | Image unevenness |
| Comparative Example 7 | H1 | 8 | 12 | 10000 | 6667 | 0.20 | 50 | 35 | 15 | 0.43 | 2857 | A | C |
| Example 20 | H1 | 8 | 12 | 5000 | 3333 | 0.20 | 50 | 35 | 15 | 0.43 | 1429 | A | B |
| Example 21 | H1 | 8 | 12 | 3000 | 2000 | 0.20 | 50 | 35 | 15 | 0.43 | 857 | A | A |
| Example 22 | H1 | 8 | 12 | 500 | 333 | 0.20 | 50 | 35 | 15 | 0.43 | 143 | A | AA |
| Example 23 | H1 | 8 | 12 | 30 | 20 | 0.20 | 50 | 35 | 15 | 0.43 | 9 | A | AA |

[Table 2]

| | Transport member | V (g/m²) | t (μm) | A (μm) | (V/t) × A | $T_B/T_A$ | E1 (mN/m) | E2 (mN/m) | ΔE(E1-E2) (mN/m) | ΔE/E2 | (V/t) × A × ΔE/E2 | Evaluation Transport defect | Evaluation Image unevenness |
|---|---|---|---|---|---|---|---|---|---|---|---|---|---|
| Example 24 | H1 | 15 | 50 | 10000 | 3000 | 0.20 | 50 | 35 | 15 | 0.43 | 1286 | A | B |
| Example 25 | H1 | 15 | 50 | 5000 | 1500 | 0.20 | 50 | 35 | 15 | 0.43 | 643 | A | A |
| Example 26 | H1 | 15 | 50 | 500 | 150 | 0.20 | 50 | 35 | 15 | 0.43 | 64 | A | AA |
| Example 27 | H1 | 15 | 50 | 50 | 15 | 0.20 | 50 | 35 | 15 | 0.43 | 6 | A | AA |
| Comparative Example 8 | H1 | 15 | 50 | 30 | 9 | 0.20 | 50 | 35 | 15 | 0.43 | 4 | C | AA |
| Comparative Example 9 | H1 | 15 | 20 | 10000 | 7500 | 0.20 | 50 | 35 | 15 | 0.43 | 3214 | A | C |
| Example 28 | H1 | 15 | 20 | 5000 | 3750 | 0.20 | 50 | 35 | 15 | 0.43 | 1607 | A | B |
| Example 29 | H1 | 15 | 20 | 1500 | 1125 | 0.20 | 50 | 35 | 15 | 0.43 | 482 | A | A |
| Example 30 | H1 | 15 | 20 | 500 | 375 | 0.20 | 50 | 35 | 15 | 0.43 | 161 | A | AA |
| Example 31 | H1 | 15 | 20 | 30 | 23 | 0.20 | 50 | 35 | 15 | 0.43 | 10 | A | AA |
| Comparative Example 10 | H1 | 15 | 12 | 10000 | 12500 | 0.20 | 50 | 35 | 15 | 0.43 | 5357 | A | C |
| Example 32 | H1 | 15 | 12 | 3000 | 3750 | 0.20 | 50 | 35 | 15 | 0.43 | 1607 | A | B |
| Example 33 | H1 | 15 | 12 | 500 | 625 | 0.20 | 50 | 35 | 15 | 0.43 | 268 | A | AA |
| Example 34 | H1 | 15 | 12 | 50 | 63 | 0.20 | 50 | 35 | 15 | 0.43 | 27 | A | AA |
| Example 35 | H1 | 15 | 12 | 30 | 38 | 0.20 | 50 | 35 | 15 | 0.43 | 16 | A | AA |
| Example 36 | H1 | 15 | 20 | 5000 | 3750 | 0.20 | 50 | 45 | 5 | 0.11 | 417 | A | AA |
| Example 37 | H1 | 15 | 20 | 5000 | 3750 | 0.20 | 50 | 38 | 12 | 0.32 | 1184 | A | A |
| Example 38 | H1 | 15 | 20 | 5000 | 3750 | 0.20 | 50 | 35 | 15 | 0.43 | 1607 | A | B |
| Example 39 | H1 | 15 | 20 | 5000 | 3750 | 0.20 | 50 | 30 | 20 | 0.67 | 2500 | A | B |
| Example 40 | H1 | 15 | 20 | 5000 | 3750 | 0.20 | 40 | 35 | 5 | 0.14 | 536 | A | A |
| Example 41 | H1 | 15 | 20 | 5000 | 3750 | 0.20 | 45 | 35 | 10 | 0.29 | 1071 | A | A |
| Example 42 | H1 | 15 | 20 | 5000 | 3750 | 0.20 | 55 | 35 | 20 | 0.57 | 2143 | A | B |
| Example 43 | H1 | 15 | 20 | 1500 | 1125 | 0.20 | 50 | 45 | 5 | 0.11 | 125 | A | AA |
| Example 44 | H1 | 15 | 20 | 1500 | 1125 | 0.20 | 50 | 38 | 12 | 0.32 | 355 | A | AA |
| Example 45 | H1 | 15 | 20 | 1500 | 1125 | 0.20 | 50 | 35 | 15 | 0.43 | 482 | A | A |

(continued)

| | Transport member | V g/m² | t µm | A µm | (V/t)×A | T$^B$/T$^A$ | E1 mN/m | E2 mN/m | ΔE(E1-E2) mN/m | ΔE/E2 | (V/t)×A×ΔE/E2 | Evaluation | |
| --- | --- | --- | --- | --- | --- | --- | --- | --- | --- | --- | --- | --- | --- |
| | | | | | | | | | | | | Transport defect | Image unevenness |
| Example 46 | H1 | 15 | 20 | 1500 | 1125 | 0.20 | 50 | 30 | 20 | 0.67 | 750 | A | A |
| Example 47 | H1 | 15 | 20 | 1500 | 1125 | 0.20 | 40 | 35 | 5 | 0.14 | 161 | A | AA |
| Example 48 | H1 | 15 | 20 | 1500 | 1125 | 0.20 | 45 | 35 | 10 | 0.29 | 321 | A | AA |
| Example 49 | H1 | 15 | 20 | 1500 | 1125 | 0.20 | 55 | 35 | 20 | 0.57 | 643 | A | A |
| Example 50 | H1 | 15 | 20 | 500 | 375 | 0.04 | 50 | 35 | 15 | 0.43 | 161 | B | AA |
| Example 51 | H1 | 15 | 20 | 500 | 375 | 0.11 | 50 | 35 | 15 | 0.43 | 161 | A | AA |
| Example 52 | H1 | 15 | 20 | 500 | 375 | 0.29 | 50 | 35 | 15 | 0.43 | 161 | A | AA |
| Example 53 | H1 | 15 | 20 | 500 | 375 | 0.39 | 50 | 35 | 15 | 0.43 | 161 | A | AA |
| Example 54 | H1 | 15 | 20 | 500 | 375 | 0.55 | 50 | 35 | 15 | 0.43 | 161 | A | AA |
| Example 55 | H1 | 15 | 20 | 500 | 375 | 0.86 | 50 | 35 | 15 | 0.43 | 161 | A | A |

[Table 3]

| | Transport member | V (g/m²) | t (μm) | A (μm) | (V/t)×A | $T_B/T_A$ | E1 (mN/m) | E2 (mN/m) | ΔE(E1-E2) (mN/m) | ΔE/E2 | (V/t)×A×ΔE/E2 | Evaluation | |
|---|---|---|---|---|---|---|---|---|---|---|---|---|---|
| | | | | | | | | | | | | Transport defect | Image unevenness |
| Comparative Example 11 | H2 | 15 | 20 | 10000 | 7500 | 0.20 | 50 | 35 | 15 | 0.43 | 3214 | A | C |
| Example 56 | H2 | 15 | 20 | 5000 | 3750 | 0.20 | 50 | 35 | 15 | 0.43 | 1607 | A | B |
| Example 57 | H2 | 15 | 20 | 1500 | 1125 | 0.20 | 50 | 35 | 15 | 0.43 | 482 | A | A |
| Example 58 | H2 | 15 | 20 | 500 | 375 | 0.20 | 50 | 35 | 15 | 0.43 | 161 | A | AA |
| Example 59 | H2 | 15 | 20 | 30 | 23 | 0.20 | 50 | 35 | 15 | 0.43 | 10 | A | AA |
| Example 60 | H3 | 15 | 20 | 100 | 75 | 0.005 | 50 | 35 | 15 | 0.43 | 32 | B | AA |
| Example 61 | H3 | 15 | 20 | 1000 | 750 | 0.02 | 50 | 35 | 15 | 0.43 | 32 | B | AA |
| Example 62 | H3 | 15 | 20 | 2000 | 1500 | 0.08 | 50 | 35 | 15 | 0.43 | 32 | A | AA |
| Example 63 | H3 | 15 | 20 | 3000 | 2250 | 0.20 | 50 | 35 | 15 | 0.43 | 32 | A | AA |
| Example 64 | H3 | 15 | 20 | 3500 | 2625 | 0.29 | 50 | 35 | 15 | 0.43 | 32 | A | AA |
| Example 65 | H3 | 15 | 20 | 4000 | 3000 | 0.42 | 50 | 35 | 15 | 0.43 | 32 | A | AA |
| Example 66 | H3 | 15 | 20 | 4500 | 3375 | 0.60 | 50 | 35 | 15 | 0.43 | 32 | A | A |
| Example 67 | H3 | 15 | 20 | 5000 | 3750 | 0.86 | 50 | 35 | 15 | 0.43 | 32 | A | B |
| Example 68 | H3 | 15 | 20 | 5200 | 3900 | 1.00 | 50 | 35 | 15 | 0.43 | 32 | A | B |
| Example 69 | H3 | 15 | 20 | 4877 | 3658 | 0.79 | 50 | 35 | 15 | 0.43 | 32 | A | B |
| Example 70 | H3 | 15 | 20 | 4246 | 3185 | 0.50 | 50 | 35 | 15 | 0.43 | 32 | A | A |
| Example 71 | H3 | 15 | 20 | 3949 | 2961 | 0.28 | 50 | 35 | 15 | 0.43 | 32 | A | AA |

As shown in Table 1 and Table 2, in Example 1 to Example 71, since the image recording method includes a step of applying an ink containing water onto a non-permeable substrate; a step of transporting the non-permeable substrate onto which the ink has been applied, using a transport member having an uneven surface; and a step of heating the non-permeable substrate, and in a case where an amount of ink applied per unit area onto the non-permeable substrate is denoted by V (g/m$^2$), a thickness of the non-permeable substrate is denoted by t ($\mu$m), and a width of a portion with a smaller surface area between a recess portion and a protrusion portion of the transport member, is denoted by A ($\mu$m), the V, the t, and the A satisfy Expression (1), it was found that it is possible to have an excellent transportability of the non-permeable substrate and to suppress an unevenness in image to be recorded.

On the other hand, in Comparative Examples 1 to 6 and 8, it was found that "(V/t) × A" was 10 or less, and the transportability of the non-permeable substrate was deteriorated.

In Comparative Examples 7 and 9 to 11, "(V/t) × A" was 4000 or more, and unevenness of the image was visible.

Next, a cyan ink, a black ink, a magenta ink, and a yellow ink were prepared by changing the white pigment contained in the white ink W1 to each of a cyan pigment, a black pigment, a magenta pigment, and a yellow pigment.

Details of the cyan pigment, the black pigment, the magenta pigment, and the yellow pigment are as follows.

· Cyan pigment: Cyan pigment: C. I. Pigment Blue 15:4, product name "Heliogen (registered trademark) Blue D 7110 F", manufactured by Sun Chemical (DIC Corporation)
· Black pigment: carbon black, product name "MOGUL E", manufactured by Cabot Corporation
. Magenta pigment: C. I. Pigment RED 122, product name "TRM-33", manufactured by Dainichiseika Color & Chemicals Mfg.Co., Ltd.
· Yellow pigment: C. I. Pigment Yellow 185, product name "Paliotol Yellow D 1155", manufactured by Sun Chemical (DIC Corporation)

In Examples 1 to 71, the white ink W1 was changed to each of the cyan ink, the black ink, the magenta ink, and the yellow ink, and image recording was performed in the same manner as in Examples 1 to 71. As a result, the same evaluation results as in a case where the white ink was used were obtained.

The disclosure of Japanese Patent Application No. 2022-186647 filed on November 22, 2022 is incorporated in the present specification by reference. In addition, all documents, patent applications, and technical standards described in the present specification are herein incorporated by reference to the same extent that each individual document, patent application, or technical standard was specifically and individually indicated to be incorporated by reference.

**Claims**

1. An image recording method comprising:

   a step of applying an ink comprising water onto a non-permeable substrate;
   a step of transporting the non-permeable substrate onto which the ink has been applied, using a transport member having an uneven surface; and
   a step of heating the non-permeable substrate,
   wherein, in a case where an amount of ink applied per unit area onto the non-permeable substrate is denoted by V (g/m$^2$), a thickness of the non-permeable substrate is denoted by t ($\mu$m), and a width of a portion with a smaller surface area between a recess portion and a protrusion portion of the transport member, is denoted by A ($\mu$m), the V, the t, and the A satisfy Expression (1),

$$10 \leq (V/t) \times A \leq 4000 \quad \ldots(1).$$

2. The image recording method according to claim 1,
   wherein the V, the t, and the A satisfy Expression (2),

$$10 \leq (V/t) \times A \leq 2000 \quad \ldots(2).$$

3. The image recording method according to claim 1,
   wherein the V, the t, and the A satisfy Expression (3),

$$10 \leq (V/t) \times A \leq 1000 \quad \ldots(3).$$

4. The image recording method according to claim 1,
wherein, in a case where a surface free energy of the non-permeable substrate is denoted by E1 (mN/m), a surface tension of the ink is denoted by E2 (mN/m), and a value obtained by subtracting E2 from E1 is denoted by ΔE, Expression (4) is satisfied,

$$\Delta E/E2 \leq 0.50 \ldots (4).$$

5. The image recording method according to claim 1,
wherein, in a case where a surface free energy of the non-permeable substrate is denoted by E1 (mN/m), a surface tension of the ink is denoted by E2 (mN/m), and a value obtained by subtracting E2 from E1 is denoted by ΔE, Expression (5) is satisfied,

$$4 \leq (V/t) \times A \times (\Delta E/E2) \leq 1200 \quad \ldots (5).$$

6. The image recording method according to claim 1,
wherein, in a case where a larger surface area between a surface area of the recess portion and a surface area of the protrusion portion of the transport member is denoted by $T^A$ and a smaller surface area between the surface area of the recess portion and the surface area of the protrusion portion of the transport member is denoted by $T^B$, Expression (6) is satisfied,

$$0.08 \leq T^B/T^A \leq 0.6 \quad \ldots (6).$$

7. The image recording method according to claim 1,
wherein the ink comprises water and a white pigment.

8. The image recording method according to claim 1,

wherein the step of applying an ink includes

a step of applying a first ink comprising water and a coagulating agent onto the non-permeable substrate, and
a step of applying a second ink comprising water and a pigment onto the non-permeable substrate onto which the first ink has been applied,

in the step of transporting, the first ink is transported using the transport member, and
in a case where an amount of the first ink applied per unit area onto the non-permeable substrate is denoted by V, the V, the t, and the A satisfy Expression (1).

## FIG. 1

EP 4 624 183 A1

## FIG. 2

EP 4 624 183 A1

FIG. 3A

FIG. 3B

FIG. 3C

## FIG. 4A

a1      a1

b1

91

## FIG. 4B

a2      a2

b2

92

## FIG. 4C

a3      a3

b3

93

## FIG. 4D

a4      a4

b4

94

## FIG. 4E

## FIG. 4F

## FIG. 4G

## INTERNATIONAL SEARCH REPORT

| International application No. |
|---|
| **PCT/JP2023/037296** |

**A.    CLASSIFICATION OF SUBJECT MATTER**

**B41M 5/00**(2006.01)i; **B41J 2/01**(2006.01)i; **B41J 2/21**(2006.01)i; **C09D 11/322**(2014.01)i; **C09D 11/54**(2014.01)i
FI:    B41M5/00 100; B41J2/01 125; B41J2/01 305; B41J2/01 501; B41J2/21; B41M5/00 112; B41M5/00 120; B41M5/00 132; C09D11/322; C09D11/54

According to International Patent Classification (IPC) or to both national classification and IPC

**B.    FIELDS SEARCHED**

Minimum documentation searched (classification system followed by classification symbols)

B41M5/00; B41J2/01; B41J2/21; C09D11/322; C09D11/54

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2020-019270 A (RICOH CO LTD) 06 February 2020 (2020-02-06)<br>claims, paragraphs [0128]-[0145] | 1-8 |
| Y | WO 2019/181638 A1 (FUJIFILM CORPORATION) 26 September 2019 (2019-09-26)<br>claims, paragraphs [0005], [0023]-[0052] | 1-8 |
| Y | JP 2004-285161 A (KONICA MINOLTA HOLDINGS INC) 14 October 2004 (2004-10-14)<br>paragraphs [0115]-[0141] | 4, 5 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/037296**

| Patent document cited in search report | | | Publication date (day/month/year) | Patent family member(s) | | | Publication date (day/month/year) |
|---|---|---|---|---|---|---|---|
| JP | 2020-019270 | A | 06 February 2020 | US | 2019/0168516 | A1 | |
| | | | | claims, paragraphs [0200]-[0249] | | | |
| | | | | EP | 3495154 | A1 | |
| WO | 2019/181638 | A1 | 26 September 2019 | JP | 2022-166276 | A | |
| JP | 2004-285161 | A | 14 October 2004 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010208207 A
- JP 2002012607 A
- JP 2002188025 A
- JP 2003026978 A
- JP 2003342503 A
- WO 2021221069 A
- JP 2015025076 A
- WO 2021192720 A
- WO 2020195360 A
- JP 54059936 A
- JP 2003306623 A
- JP 2015083688 A
- JP 2022186647 A

**Non-patent literature cited in the description**

- **D. K. OWENS** ; **R. C. WENDT**. *Journal of applied polymer science*, 1969, vol. 13, 1741-1747
- Industrial Organic Pigments. **W. HERBST** ; **K. HUNGER**. Encyclopedia of Pigments. 2000